# EUROPÄISCHE PATENTSCHRIFT

(11) **EP 2 655 280 B1**
(45) Veröffentlichungstag und Bekanntmachung des Hinweises auf die Patenterteilung: **15.07.2015**
(21) Anmeldenummer: 12708726.0
(22) Anmeldetag: 25.01.2012
(51) Int. Cl.: C04B 20/10, C04B 40/06, C09K 3/22, C04B 24/08, C04B 24/42, C04B 24/36

(54) **STAUBREDUZIERUNGSMITTEL FÜR TROCKENMISCHUNGEN VON BAUSTOFFFORMULIERUNGEN**
DUST REDUCER AGENT FOR DRY MIXES OF BUILDING MATERIAL FORMULATIONS
AGENTS DE RÉDUCTION DES POUSSIÈRES POUR DES MÉLANGES SECS DE FORMULATIONS DE MATÉRIAUX DE CONSTRUCTION

(30) Priorität: 27.01.2011 DE 102011003268
(43) Veröffentlichungstag der Anmeldung: 30.10.2013
(73) Patentinhaber: Wacker Chemie AG, 81737 München (DE)
(72) Erfinder: ZEH, Harald, 84489 Burghausen (DE); BEZLER, Jürgen, 84489 Burghausen (DE); FRITZE, Peter, 84533 Haiming (DE)
(74) Vertreter: Ege, Markus
(86) Internationale Anmeldenummer: PCT/EP2012/051169
(87) Internationale Veröffentlichungsnummer: WO 2012/101187

(56) Entgegenhaltungen:
- EP-A1- 0 919 526
- EP-A1- 1 120 384
- WO-A2-2006/084588
- DE-U1-202006 016 797
- FR-A1- 2 942 474

## Beschreibung

Die Erfindung betrifft Verfahren zur Herstellung von Baustoffformulierungen in Form von Trockenmischungen, die so erhältlichen Baustoffformulierungen sowie deren Verwendung insbesondere als Fliesenkleber oder Spachtelmassen.

Viele Baustoffformulierungen enthalten hydraulisch abbindende Bindemittel, wie Zement, sowie gegebenenfalls Füllstoffe und gegebenenfalls Zusätze, wie Bindemittel auf Basis ethylenisch ungesättigter Monomere. Derartige Baustoffformulierungen finden beispielsweise als Fliesenkleber, Fugenfüller, Spachtelmassen, Dichtschlämme, Putze oder Estriche Anwendung. Häufig werden Baustoffformulierungen durch Mischen ihrer trockenen Bestandteile in einem Mischwerk in Form von Trockenmischungen hergestellt und als Fertigprodukte auf die Baustelle angeliefert, wo die Baustoffformulierungen dann nach Zugabe von Wasser als Baumaterial verarbeitet werden. Nachteiligerweise führt die Handhabung der Trockenmischungen, beispielsweise bei deren Herstellung oder auch bei Abfüll- bzw. Umfüllvorgängen, zu Staubemissionen, die gesundheitsschädlich sind, so dass umfangreiche und aufwändige arbeitshygienische Maßnahmen zum Schutz der Bauarbeiter ergriffen werden müssen.

Aus diesen Gründen wurden zahlreiche Ansätze unternommen, um die Staubemission bei der Handhabung von Trockenmischungen zu reduzieren. So wurde beispielsweise versucht, die Staubentwicklung von hydraulisch abbindenden Bindemitteln über deren Mahlgrad bzw. Kornzusammensetzung zu verringern. Allerdings ist die Verarbeitbarkeit gröberer Pulver deutlich schlechter. Bekannt ist auch der Zusatz von Additiven mit staubreduzierender Wirkung. Solche Staubreduzierungsmittel können mit dem Anmachwasser in zementäre Baustoffformulierungen eingebracht werden, um das Stauben beim Aufbringen von Spritzbeton oder Spritzmörtel zu vermindern. Zu diesem Zweck wurden Polyethylenglykole oder Ethylenoxid/Propylenoxid-Blockcopolymere eingesetzt. Derartige Additive beeinflussen allerdings vielfach das Verarbeitungsverhalten der Baustoffformulierungen negativ, da sie beispielsweise zu einer Abbindeverzögerung oder einer ausgeprägten Hygroskopie der Baustoffformulierungen führen.

Aus der WO 2006/084588 ist die Verwendung von aliphatischen Kohlenwasserstoffen, wie Mineralöl oder Paraffinöl als Staubreduzierungsmittel für Baustoffformulierungen bekannt. Die Kohlenwasserstoffe werden durch Aufsprühen auf die Trockenmischungen der Baustoffformulierungen aufgebracht. Allerdings müssen die Trockenmischungshersteller eigens für dieses Verfahren spezielle Sprühmaschinen bzw. Bedüsungsequipment anschaffen, was einen erheblichen Aufwand darstellt. Für dasselbe Verfahren empfehlen die DE 202006016797U1 als alternative Staubreduzierungsmittel Alkohole, Zelluloseether oder Fettsäureether und die WO 2010/119017 Ester von 2-Ethylhexansäure mit hochsiedenden Alkoholen, wie Heptanol, Dodecanol oder Propandiol. Die WO 2010/097337 empfiehlt Pflanzenöle als Staubreduzierungsmittel und mischt diese mit den weiteren Komponenten von Baustoffformulierungen ab.

Vor diesem Hintergrund bestand die Aufgabe, alternative Maßnahmen zum Einbringen von Staubreduzierungsmittel in BaustoffTrockenformulierungen bereitzustellen, mit denen die Staubreduzierungsmittel in effizienter Weise in die Trockenformulierungen eingebracht werden können, ohne dass bei den Herstellern der Baustoffformulierungen zusätzliche Arbeitsschritte erforderlich werden oder zusätzliches Equipment, wie Sprühmaschinen bzw. Bedüsungsequipment, angeschafft werden müssen. Zudem sollten weitere Staubreduzierungsmittel bereitgestellt werden, welche das Stauben bei der Handhabung der Trockenmischungen reduzieren. Die Staubreduzierungsmittel enthaltenden Baustoff-Trockenformulierungen sollten auch lagerstabil sein, und insbesondere sollten die Staubreduzierungsmittel in derartigen Trockenformulierungen ihre Staub reduzierende Wirkung während der Lagerung nicht zu verlieren, wie dies bei gängigen Staubreduzierungsmitteln häufig der Fall ist.

Überraschenderweise wurde die Aufgabe gelöst, indem die Staubreduzierungsmittel zuerst auf anorganische Träger mit einer Porosität von ≥ 65% aufgebracht wurden und in dieser Form in die Baustoffformulierungen eingebracht wurden. Die Staubreduzierungsmittel werden hierbei ausgewählt aus der Gruppe umfassend Polysiloxane, Fettsäuren, Fettsäurederivate, natürliche Öle und Kohlenwasserstoffe.

Bisher wurden Polysiloxane oder Fettsäureverbindungen zur Hydrophobierung von Baustoffformulierungen verwendet, wie beispielsweise in der WO 2005/118684 beschrieben. Um bei Einsatz von flüssigen Hydrophobierungsmitteln das Auftreten von Verklumpungen zu vermeiden, empfiehlt die EP 0919526, die Hydrophobierungsmittel auf Kieselsäure-Träger aufzubringen und dadurch in ein festes, nicht zu Verklumpungen neigendes Additiv zu überführen. Als Hydrophobierungsmittel sind die verschiedensten Siliciumverbindungen beschrieben, wie Alkoxysilane, Organosiloxane oder Alkalisiliconate. Es sind aber nicht unmittelbar Baustoffformulierungen in Form von Trockenmischungen beschrieben, die auf Träger aufgebrachte Polysiloxane enthalten. Die EP 1120384 offenbart den Einsatz von H-Siloxanen als Hydrophobierungsmittel. Auch die EP 0765899 empfiehlt, flüssige Zusatzstoffe auf Träger aufzubringen und die so erhaltenen festen Additive in Baustoffformulierungen einzubringen.

Gegenstand der Erfindung sind Verfahren zur Herstellung von Baustoffformulierungen in Form von Trockenmischungen, dadurch gekennzeichnet, dass
(a) ein oder mehrere Staubreduzierungsmittel auf einen oder mehrere anorganische Träger aufgebracht werden, wodurch geträgerte Staubreduzierungsmittel gebildet werden, wobei die anorganischen Träger eine Porosität von ≥ 65% aufweisen, und
   wobei die Staubreduzierungsmittel ausgewählt werden aus der Gruppe bestehend aus Fettsäuren, Fettsäurederivaten, natürlichen Ölen, Kohlenwasserstoffen und Polysiloxanen bestehend aus Einheiten der allgemeinen Formel R_{c}Si(OR')_{d}(OH)ₑO_{(4-c-d-e)/2} mit c = 0 bis 3, d = 0 bis 3, e = 0 bis 3, worin die Summe c+d+e je Einheit höchstens 3,5 ist, worin jeweils R gleich oder verschieden ist und verzweigte oder unverzweigte, gegebenenfalls substituierte Kohlenwasserstoffreste mit 1 bis 22 Kohlenstoffatomen, R' gleiche oder verschiedene, gegebenenfalls substituierte Kohlenwasserstoffreste mit jeweils 1 bis 6 Kohlenstoffatomen bedeutet, und
(b) die in Schritt (a) erhaltenen geträgerten Staubreduzierungsmittel mit einem oder mehreren mineralischen Bindemitteln, einem oder mehreren Polymeren auf Basis von einem oder mehreren ethylenisch ungesättigten Monomeren, gegebenenfalls einem oder mehreren Füllstoffen und gegebenenfalls einem oder mehreren Additiven gemischt werden.

Ein weiterer Gegenstand der Erfindung sind Baustoffformulierungen in Form von Trockenmischungen erhältlich nach dem vorgenannten Verfahren.

Als Staubreduzierungsmittel bevorzugte Polysiloxane sind aufgebaut aus Einheiten der allgemeinen Formel R_{c}Si(OR')_{d}(OH) ₑO₍₄-_{c-d-e)/2} mit c = 0 bis 3, d = 0 bis 3, e = 0 bis 3 und wobei die Summe c+d+e je Einheit höchstens 3,5 ist, in denen jeweils R gleich oder verschieden ist und verzweigte oder unverzweigte Alkylreste mit 1 bis 22 C-Atomen, Cycloalkylreste mit 3 bis 10 C-Atomen, Alkylenreste mit 2 bis 4 C-Atomen, sowie Aryl-, Aralkyl-, Alkylaryl-Reste mit 6 bis 18 C-Atomen bedeutet, und R' gleiche oder verschiedene Alkylreste und Alkoxyalkylenreste mit jeweils 1 bis 4 C-Atomen bedeutet, vorzugsweise Methyl und Ethyl bedeutet, wobei die Reste R und R' auch mit Halogenen wie Chlor, mit Ether-, Thioether-, Ester-, Amid-, Nitril-, Hydroxyl-, Amin-, Carboxyl-, Sulfonsäure-, Carbonsäureanhydrid und Carbonyl-Gruppen substituiert sein können.

Besonders bevorzugte Polysiloxane erfüllen die allgemeine Formel R"' a R" ₃₋ₐ SiO (SiR'' ₂ O) ₙSiR'' ₃₋ₐ R"' a, worin die einzelnen R" unabhängig voneinander die weiter oben für R und (OR') angegebenen Bedeutungen annehmen können, R"' für OH steht, a einen ganzzahligen Wert zwischen 0 und 3 bedeutet und n einen ganzzahligen Wert zwischen 0 und 500 annimmt.

Bevorzugte Reste R" sind Methyl-, Ethyl-, n-Propyl-, iso-Propyl-, 1-n-Butyl-, 2-n-Butyl-, iso-Butyl-, tert.-Butyl-, n-Pentyl-, iso-Pentyl-, neo-Pentyl-, tert.-Pentylrest, Hexylreste wie der n-Hexylrest, Heptylreste wie der n-Heptylrest, Octylreste wie der n-Octylrest und iso-Octylreste wie der 2,2,4-Trimethylpentylrest, Nonylreste wie der n-Nonylrest, Decylreste wie der n-Decylrest, Dodecylreste wie der n-Dodecylrest, und Octadecylreste wie der n-Octadecylrest, Cycloalkylreste wie Cyclopentyl-, Cyclohexyl-, Cycloheptyl- und Methylcyclohexylreste. Besonders bevorzugt handelt es sich bei den Resten R" um einwertige Kohlenwasserstoffreste mit 1 bis 6 Kohlenstoffatomen, wie Methyl-, Ethyl-, n-Propyl-, Isopropyl-, n-Butyl-, sec-Butyl, Amyl- und Hexyl-Reste, wobei der Methylrest am meisten bevorzugt ist.

Bevorzugte Alkoxyreste R" sind solche mit 1 bis 6 Kohlenstoffatomen wie Methoxy-, Ethoxy-, Propoxy- und n-Butoxyrest, welche gegebenenfalls noch mit Oxyalkylenresten wie Oxyethylen- oder Oxymethylen-Resten substituiert sein können. Besonders bevorzugt werden der Methoxy- und Ethoxyrest. Die genannten Alkylreste und Alkoxyreste R" können gegebenenfalls auch substituiert sein mit Halogen, Mercaptogruppen, epoxyfunktionellen Gruppen, Carboxygruppen, Ketogruppen, Enamingruppen, Aminogruppen, Aminoethylaminogruppen, iso-Cyanatogruppen, Aryloxygruppen, Alkoxysilylgruppen und Hydroxygruppen.

a steht vorzugsweise für die ganzzahligen Werte 1 oder 2 und besonders bevorzugt für 1.

n steht vorzugsweise für ganzzahlige Werte zwischen 0 und 200, noch mehr bevorzugt für ganzzahlige Werte zwischen 1 und 100, besonders bevorzugt für ganzzahlige Werte zwischen 1 und 50, noch mehr bevorzugt für ganzzahlige Werte zwischen 1 und 25 und am meisten bevorzugt für ganzzahlige Werte zwischen 1 und 15.

Am meisten bevorzugte Polysiloxane sind Dimethylpolysiloxane, insbesondere mit Trimethylsiloxygruppen endblockierte Dimethylpolysiloxane oder Dimethylpolysiloxane mit Si-OH-Gruppen in den endständigen Einheiten. Bevorzugt sind auch Gemische von linearen oder verzweigten unfunktionalisierten Dimethylpolysiloxanen. Die Polysiloxane tragen vorzugsweise keine ethylenisch ungesättigte Gruppe.

Die dynamische Viskosität der Polysiloxane beträgt vorzugsweise 0,1 bis 500 mPas, besonders bevorzugt 0,5 bis 360 mPas, ganz besonders bevorzugt 1 bis 100 mPas, noch mehr bevorzugt 1 bis 50 mPas und am meisten bevorzugt 2 bis 25 mPas (bestimmt nach ISO3104 bei 25°C).

Die Oberflächenspannung der Polysiloxane beträgt vorzugsweise 15 bis 45 mPas, besonders bevorzugt 15 bis 22 mPas, ganz besonders bevorzugt 16 bis 21 mPas, noch mehr bevorzugt 16 bis 20 mPas und am meisten bevorzugt 16 bis 19 mPas (bestimmt nach DIN53914 bei 25°C).

Bevorzugte Fettsäuren oder Fettsäurederivate werden ausgewählt aus der Gruppe umfassend gesättigte und ungesättigte Fettsäuren mit 8 bis 22 C-Atomen, deren Metallseifen, deren Amide sowie deren Ester mit einwertigen Alkoholen mit 1 bis 14 C-Atomen, mit Glykol, mit Polyglykol, mit Polyalkylenglykol, mit Glycerin, mit Mono-, Di- oder Triethanolamin, mit Monosacchariden und mit Polyhydroxyverbindungen.

Besonders bevorzugte Fettsäuren sind Laurinsäure (n-Dodecansäure), Myristinsäure (n-Tetradecansäure), Palmitinsäure (n-Hexadecansäure), Stearinsäure (n-Octadecansäure) sowie Ölsäure (9-Dodecensäure).

Besonders bevorzugte Metallseifen sind die der bevorzugten C₈-bis C₂₂-Fettsäuren mit Metallen der 1. bis 3. Hauptgruppe bzw. 2. Nebengruppe des PSE, sowie mit Ammoniumverbindungen NX₄⁺, wobei X gleich oder verschieden ist und für H, C₁- bis C₈-Alkylrest und C₁- bis C₈-Hydroxyalkylrest steht. Am meisten bevorzugt werden Metallseifen mit Lithium, Natrium, Kalium, Magnesium, Calcium, Aluminium, Zink, und den Ammoniumverbindungen.

Besonders bevorzugte Fettsäureamide sind die mit Mono- oder Diethanolamin und den obengenannten C₈- bis C₂₂-Fettsäuren erhältlichen Fettsäureamide.

Besonders bevorzugte Fettsäureester sind die C₁- bis C₁₄-Alkyl-ester und -Alkylarylester der genannten C₈- bis C₂₂-Fettsäuren, vorzugsweise Methyl-, Ethyl-, Propyl-, Butyl-, Ethylhexyl-Ester sowie der Benzylester. Besonders bevorzugte Fettsäureester sind auch die Mono-, Di- und Polyglykolester der C₈- bis C₂₂-Fettsäuren. Weitere besonders bevorzugte Fettsäureester sind die Mono- und Diester von Polyglykolen und/oder Polyalkylenglykolen mit bis zu 20 Oxyalkylen-Einheiten, wie Polyethylenglykol und Polypropylenglykol. Besonders bevorzugt sind auch die Mono-, Di- und Tri-Fettsäureester des Glycerins mit den genannten C₈- bis C₂₂-Fettsäuren, sowie die Mono-, Di- und Tri-Fettsäureester von Mono-, Di- und Triethanolamin mit den genannten C₈- bis C₂₂-Fettsäuren. Besonders bevorzugt sind auch die Fettsäureester von Sorbit und Mannit. Besonders bevorzugt sind die C₁- bis C₁₄-Alkylester und Alkylarylester der Laurinsäure und der Ölsäure, Mono- und Diglykolester der Laurinsäure und der Ölsäure, sowie die Mono-, Di- und Tri-Fettsäureester des Glycerins mit der Laurinsäure und der Ölsäure.

Natürliche Öle enthalten im Allgemeinen ein oder mehrere Carbonsäuren oder deren Ester mit Alkoholen. Die Carbonsäuren enthalten zumeist 4 bis 28 Kohlenstoffatome. Die Alkohole enthalten üblicherweise 1 bis 12, insbesondere 2 bis 12 Kohlenstoffatome. Die natürlichen Öle können nativ, kaltgepresst, raffiniert oder nichtraffiniert sein. Beispiele für natürliche Öle sind insbesondere Pflanzenöle, wie Sonnenblumenöl, Rapsöl, Erdnussöl, Walnussöl, Hanföl, Kokosöl, Kürbisöl, Leinöl, Maiskeimöl, Mohnöl, Olivenöl, Palmöl, Sesamöl, Baumwollöl, Senföl oder Sojaöl.

Kohlenwasserstoffe stehen für Substanzen, die im Allgemeinen im Wesentlichen aus Kohlenstoffatomen und Wasserstoffatomen bestehen. Kohlenwasserstoffe liegen häufig in Form von Kohlenwasserstoffgemischen vor. Die Kohlenwasserstoffe sind vorzugsweise aliphatische Kohlenwasserstoffe oder Kohlenwasserstoffgemische, insbesondere lineare oder verzweigte, vorzugsweise lineare, gesättigte oder ungesättigte Kohlenwasserstoffe oder Kohlenwasserstoffgemische, vorzugsweise gesättigte aliphatische Kohlenwasserstoffe oder Kohlenwasserstoffgemische.

Die Kohlenwasserstoffe weisen Siedepunkte oder Siedebereiche von vorzugsweise 100 bis 400°C, insbesondere 150 bis 350°C, besonders bevorzugt von 200 bis 300°C auf, jeweils bezogen auf Druck von 1 bar. Die Kohlenwasserstoffe haben vorzugsweise mehr als 10 Kohlenstoffatome, insbesondere mehr als 15 Kohlenstoffatome und besonders bevorzugt mehr als 20 Kohlenstoffatome. Bevorzugt sind auch Kohlenwasserstoffe mit 10 bis 100, besonders bevorzugt 10 bis 40 und am meisten bevorzugt von 15 bis 30 Kohlenstoffatomen. Die Kohlenwasserstoffe haben gewichtsmittlere Molekularmassen von vorzugsweise 100 bis 4.000 g/mol, besonders bevorzugt von 100 bis 2.000 g/mol, noch mehr bevorzugt von 150 bis 1.000 g/mol und am meisten bevorzugt von 250 bis 500 g/mol.

Als Staubreduzierungsmittel sind Fettsäuren oder Fettsäurederivate bevorzugt, Kohlenwasserstoffe besonders bevorzugt und Polysiloxane am meisten bevorzugt.

Die anorganischen Träger basieren vorzugsweise auf natürlichen oder synthetischen Carbonaten, Silicaten oder sonstigen anorganischen Oxiden oder Mineralien.

Beispiele für Carbonate sind Magnesiumcarbonat oder Calciumcarbonat. Beispiele für Silicate sind Quarz, Cristobalit, pyrogene oder gefällte Kieselsäure, insbesondere hochdisperse Kieselsäure, Diatomeenerde, Kieselgur, Kieselerde, Magnesiumhydrosilicate, Microsilica, Perlit, Dicalit, Zeolithe oder Poraver (Schaumglas).

Bei sonstigen anorganischen Oxiden handelt es sich vorzugsweise um Oxide von Titan, Zircon, Aluminium, Bor oder Phosphor. Beispiele für sonstige anorganische Oxide oder Mineralien sind Titandioxid, Tonerde, Bleicherden, Kaolin, Talkum, Glimmer, aktiviertes Aluminiumoxid, Vermiculite, wie Bentonit, oder Phosphate, wie Natriumphosphat.

Besonders bevorzugt basieren die anorganischen Träger auf Calciumcarbonat, Calcit, Kreide, Dolomit, Quarz, Cristobalit, Kaolin, Talkum, Glimmer, pyrogene oder gefällte Kieselsäure, insbesondere hochdisperse Kieselsäure, Diatomeenerde, Kieselgur, Kieselerde, Microsilica, Perlit, Dicalit, Zeolithe oder Poraver (Schaumglas).

Am meisten bevorzugt basieren die anorganischen Träger auf Perlit, Dicalit, Zeolithe oder Kieselsäure, wie pyrogener oder gefällter Kieselsäure.

Die anorganischen Träger basieren also vorzugsweise nicht auf mineralischen Bindemitteln, insbesondere auch nicht auf den weiter unten aufgeführten mineralischen Bindemitteln.

Wesentlich für die vorliegende Erfindung ist die physikalische Beschaffenheit der anorganischen Träger. Die erforderliche physikalische Beschaffenheit wird durch die Porosität der anorganischen Träger charakterisiert. Die Porosität stellt das Verhältnis von Hohlraumvolumen der anorganischen Träger zu deren Gesamtvolumen dar. Die Bestimmung der Porosität erfolgt mittels Quecksilberporosimetrie mit dem Quecksilber-Porosimeter AutoPore IV der Firma Micrometrics in Anlehnung an ISO 15901, wobei als Fülldruck 10,3 kPa angewendet wurden. Diese Bestimmungsmethode wird im folgenden als Quecksilberporosimetrie bezeichnet.

Die anorganischen Träger haben eine Porosität von vorzugsweise ≥ 70%, besonders bevorzugt ≥ 75% und am meisten bevorzugt ≥ 80% (bestimmt mittels Quecksilberporosimetrie). Hierbei ist die Porosität der anorganischen Träger vorzugsweise ≤ 95% und besonders bevorzugt ≤ 90% (bestimmt mittels Quecksilberporosimetrie).

In den anorganischen Trägern beträgt der Anteil der Poren mit einem Porendurchmesser von ≥ 2000 nm vorzugsweise ≥ 10%, mehr bevorzugt ≥ 25%, noch mehr bevorzugt ≥ 30%, besonders bevorzugt ≥ 35% und am meisten bevorzugt ≥ 40%, jeweils bezogen auf die Gesamtzahl der Poren der anorganischen Träger. In den anorganischen Trägern beträgt der Anteil der Poren mit einem Porendurchmesser von ≥ 20000 nm beträgt vorzugsweise ≥ 5%, mehr bevorzugt ≥ 15%, besonders bevorzugt ≥ 20% und am meisten bevorzugt ≥ 25%, jeweils bezogen auf die Gesamtzahl der Poren der anorganischen Träger. Die Bestimmung erfolgt jeweils mittels Quecksilberporosimetrie.

Die anorganischen Träger haben eine BET-Oberfläche von vorzugsweise ≥ 1 m²/g, mehr bevorzugt ≥ 2 m²/g, noch mehr bevorzugt ≥ 5 m²/g, besonders bevorzugt ≥ 10 m²/g und am meisten bevorzugt ≥ 15 m²/g·(DIN EN ISO 9277:2003-5).

Die anorganischen Träger haben ein Dichte von vorzugsweise 50 bis 300 g/dm³ und besonders bevorzugt von 80 bis 250 g/dm³ (Bestimmung nach DIN EN ISO 787-10).

Die Teilchengröße der anorganischen Träger beträgt vorzugsweise von 0,005 bis 3000 µm, besonders bevorzugt von 1 bis 1000 µm und am meisten bevorzugt 10 bis 500 µm.

Im Allgemeinen liegen die anorganischen Träger in Form von Pulvern vor.

Besonders bevorzugt sind anorganische Träger mit einer Flüssigkeitsaufnahme von 10 bis 75 Gew.-%, insbesondere 15 bis 75 Gew.-%, bezogen auf das Gesamtgewicht der anorganischen Träger. Die Flüssigkeitsaufnahme solcher Träger kann dabei mit gängigen Methoden bestimmt werden, beispielsweise durch Bestimmung der DOP-Aufnahme analog DIN 53417, oder durch Bestimmung der Quecksilberporosität mit Geräten wie AutoPore IV.

Die geträgerten Staubreduzierungsmittel enthalten vorzugsweise 5 bis 90 Gew.-% und besonders bevorzugt 10 bis 66 Gew.-% anorganische Träger, bezogen auf das Gesamtgewicht der Staubreduzierungsmittel und anorganischen Träger.

Die geträgerten Staubreduzierungsmittel enthalten vorzugsweise 10 bis 95 Gew.-%, besonders bevorzugt 20 bis 70 Gew.-% und am meisten bevorzugt 40 bis 70 Gew.-% Staubreduzierungsmittel, bezogen auf das Gesamtgewicht der anorganischen Träger.

Das Aufbringen der Staubreduzierungsmittel auf die anorganischen Träger kann durch Aufsprühen, Auftropfen oder Mischen der vorgenannten Komponenten erfolgen. Bevorzugt sind das Aufsprühen oder Auftropfen der Staubreduzierungsmittel auf die anorganischen Träger. Besonders bevorzugt ist das Aufsprühen oder Auftropfen unter gleichzeitigem Rühren oder Mischen.

Die Staubreduzierungsmittel werden vorzugsweise als Reinsubstanz aufgebracht, insbesondere wenn die Staubreduzierungsmittel in flüssiger oder geschmolzener Form vorliegen. Auf diese Weise kann der homogene Auftrag in einfacher Weise bei gleichzeitig guter Haftung und Anfangsadhäsion gewährleistet werden. Die Staubreduzierungsmittel können auch in Form von Feststoffen eingesetzt werden. Schließlich ist es auch möglich, wenngleich weniger bevorzugt, die Staubreduzierungsmittel in Form einer Lösung, Suspension oder Emulsion, gegebenenfalls in Wasser, einzusetzen. Bei Einsatz von Lösungsmittel kann ein Trocknen der geträgerten Staubreduzierungsmittel zweckmäßig sein. Die geträgerten Staubreduzierungsmittel enthalten vorzugsweise ≤ 5 Gew.-% Wasser, bezogen auf das Gesamtgewicht der geträgerten Staubreduzierungsmittel, und besonders bevorzugt im Wesentlichen kein Wasser. Kein Wasser bedeutet, dass den Ausgangsmaterialien zur Herstellung der geträgerten Staubreduzierungsmitteln kein Wasser zugesetzt wird.

Das Aufsprühen oder Auftropfen der Staubreduzierungsmittel auf die anorganischen Träger erfolgt unter Einsatz von gängigen Sprühdüsen.

Das Mischen kann in jedem beliebigen, für Pulvermischungen geeigneten Gerät erfolgen. Geeignete Mischer sind beispielsweise kontinuierlich und diskontinuierlich arbeitende Schneckenbandmischer, Doppelspiralmischer, Schaufelmischer, Pflugscharmischer und schnell- bzw. langsamlaufende Paddelmischer. Ferner seien Wirbelschneckenmischer und Trogmischer erwähnt. Auch Mischer mit rotierenden Mischbehältern sind brauchbar, wie z.B. die Rhönradmischer, Taumelmischer, Doppelkonusmischer und V-Mischer.

Das Aufbringen der Staubreduzierungsmittel auf die anorganischen Träger erfolgt im Allgemeinen bei Raumtemperatur. In verschiedenen Fällen ist es jedoch vorteilhaft dies bei erhöhter Temperatur vorzunehmen. Dies gilt insbesondere dann, wenn die Viskosität der flüssigen oder pastösen Staubreduzierungsmittel bei Raumtemperatur für eine gleichmäßige Einarbeitung zu hoch ist, wenn die Staubreduzierungsmittel einen knapp über der Raumtemperatur liegenden Schmelzpunkt aufweisen oder wenn die Staubreduzierungsmittel in der Trägersubstanz ganz oder teilweise gelöst werden sollen.

Im Allgemeinen ist es vorteilhaft, die anorganischen Träger vorzulegen und die Staubreduzierungsmittel zuzudosieren, besonders bevorzugt aufzusprühen oder aufzutropfen. Das Aufbringen kann auch kontinuierlich erfolgen.

Die geträgerten Staubreduzierungsmittel liegen im Allgemeinen in fester Form vor. Die geträgerten Staubreduzierungsmittel können aber auch in Pastenform vorliegen.

Geeignete mineralische Bindemittel sind beispielsweise Zement, insbesondere Portlandzement, Aluminatzement, insbesondere Calcium-Sulfo-Aluminatzement, Trasszement, Hüttenzement, Magnesiazement, Phosphatzement, oder Hochofenzement, sowie Mischzemente, Füllzemente, Flugasche, Hüttensand, Kalkhydrat, Weißkalkhydrat, Calciumoxid (ungelöschter Kalk) und Gips, wie alpha-Halbhydrat, beta-Halbhydrat, Anhydrit oder CaSO4-Dihydrat. Bevorzugt werden Portlandzement, Aluminatzement und Hüttenzement, sowie Mischzemente, Füllzemente, Kalkhydrat, Weißkalkhydrat oder Gips, wie alpha-Halbhydrat oder Anhydrit.

Mineralische Bindemittel umfassen also vorzugsweise keine Silicate. Bei den erfindungsgemäßen Baustoffformulierungen handelt es sich also vorzugsweise um keine Silikatputze.

Die Polymere basieren auf einem oder mehreren ethylenisch ungesättigten Monomeren, wie beispielsweise auf einem oder mehreren ethylenisch ungesättigten Monomeren ausgewählt aus der Gruppe umfassend Vinylester, (Meth)acrylsäureester, Vinylaromaten, Olefine, 1,3-Diene und Vinylhalogenide und gegebenenfalls weiteren damit copolymerisierbaren Monomeren.

Geeignete Vinylester sind beispielsweise solche von Carbonsäuren mit 1 bis 15 C-Atomen. Bevorzugt werden Vinylacetat, Vinylpropionat, Vinylbutyrat, Vinyl-2-ethylhexanoat, Vinyllaurat, 1-Methylvinylacetat, Vinylpivalat und Vinylester von α-verzweigten Monocarbonsäuren mit 9 bis 11 C-Atomen, beispielsweise VeoVa9^{A} oder VeoVa10^{R} (Handelsnamen der Firma Resolution). Besonders bevorzugt ist Vinylacetat.

Geeignete Monomeren aus der Gruppe Acrylsäureester oder Methacrylsäureester sind beispielsweise Ester von unverzweigten oder verzweigten Alkoholen mit 1 bis 15 C-Atomen. Bevorzugte Methacrylsäureester oder Acrylsäureester sind Methylacrylat, Methylmethacrylat, Ethylacrylat, Ethylmethacrylat, Propylacrylat, Propylmethacrylat, n-Butylacrylat, n-Butylmethacrylat, t-Butylacrylat, t-Butylmethacrylat, 2-Ethylhexylacrylat. Besonders bevorzugt sind Methylacrylat, Methylmethacrylat, n-Butylacrylat, t-Butylacrylat und 2-Ethylhexylacrylat.

Als Vinylaromaten bevorzugt sind Styrol, Methylstyrol und Vinyltoluol. Bevorzugtes Vinylhalogenid ist Vinylchlorid. Die bevorzugten Olefine sind Ethylen, Propylen und die bevorzugten Diene sind 1,3-Butadien und Isopren.

Gegebenenfalls können noch 0 bis 10 Gew.-%, bezogen auf das Gesamtgewicht des Monomergemisches, Hilfsmonomere copolymerisiert werden. Bevorzugt werden 0,1 bis 5 Gew.-% Hilfsmonomere eingesetzt. Beispiele für Hilfsmonomere sind ethylenisch ungesättigte Mono- und Dicarbonsäuren, vorzugsweise Acrylsäure, Methacrylsäure, Fumarsäure und Maleinsäure; ethylenisch ungesättigte Carbonsäureamide und -nitrile, vorzugsweise Acrylamid und Acrylnitril; Mono- und Diester der Fumarsäure und Maleinsäure wie die Diethyl-, und Diisopropylester sowie Maleinsäureanhydrid; ethylenisch ungesättigte Sulfonsäuren bzw. deren Salze, vorzugsweise Vinylsulfonsäure, 2-Acrylamido-2-methyl-propansulfonsäure. Weitere Beispiele sind vorvernetzende Comonomere wie mehrfach ethylenisch ungesättigte Comonomere, beispielsweise Diallylphthalat, Divinyladipat, Diallylmaleat, Allylmethacrylat oder Triallylcyanurat, oder nachvernetzende Comonomere, beispielsweise Acrylamidoglykolsäure (AGA), Methylacrylamidoglykolsäuremethylester (MAGME), N-Methylol-acrylamid (NMA), N-Methylolmethacrylamid, N-Methylolallylcarbamat, Alkylether wie der Isobutoxyether oder Ester des N-Methylolacrylamids, des N-Methylolmethacrylamids und des N-Methylolallylcarbamats. Geeignet sind auch epoxidfunktionelle Comonomere wie Glycidylmethacrylat und Glycidylacrylat. Weitere Beispiele sind siliciumfunktionelle Comonomere, wie Acryloxypropyltri (alkoxy) - und Methacryloxypropyltri(alkoxy)-Silane, Vinyltrialkoxysilane und Vinylmethyldialkoxysilane, wobei als Alkoxygruppen beispielsweise Ethoxy- und Ethoxypropylenglykolether-Reste enthalten sein können. Genannt seien auch Monomere mit Hydroxy- oder CO-Gruppen, beispielsweise Methacrylsäure- und Acrylsäurehydroxyalkylester wie Hydroxyethyl-, Hydroxypropyl- oder Hydroxybutylcrylat oder -methacrylat sowie Verbindungen wie Diacetonacrylamid und Acetylacetoxyethylacrylat oder -methacrylat.

Bevorzugt werden ein oder mehrere Polymerisate ausgewählt aus der Gruppe umfassend Vinylester-Homopolymerisate, Vinylester-Mischpolymerisate enthaltend eine oder mehrere Monomereinheiten aus der Gruppe umfassend Vinylester, Olefine, Vinylaromaten, Vinylhalogenide, Acrylsäureester, Methacrylsäureester, Fumar- und/oder Maleinsäuremono- oder -diester; (Meth)acryl-äueester-Homopolymerisate, (Meth)acrylsäureester-Mischpolyerisate enthaltend eine oder mehrere Monomereinheiten aus der Gruppe umfassend Methacrylsäureester, Acrylsäureester, Olefine, Vinylaromaten, Vinylhalogenide, Fumar- und/oder Maleinsäuremono- oder -diester; Homo- oder Mischpolymerisate von Dienen wie Butadien oder Isopren, sowie von Olefinen wie Ethen oder Propen, wobei die Diene beispielsweise mit Styrol, (Meth)acrylsäureestern oder den Estern der Fumar- oder Maleinsäure copolymerisiert sein können; Homo- oder Mischpolymerisate von Vinylaromaten, wie Styrol, Methylstyrol, Vinyltoluol; Homo- oder Mischpolymerisate von Vinylhalogenverbindungen wie Vinylchlorid, wobei die Polymerisate noch Hilfsmonomere enthalten können.

Besonders bevorzugt werden Mischpolymerisate von einem oder mehreren Vinylestern mit 1 bis 50 Gew.-% Ethylen; Mischpolymerisate von Vinylacetat mit 1 bis 50 Gew.-% Ethylen und 1 bis 50 Gew.-% von einem oder mehreren weiteren Comonomeren aus der Gruppe Vinylester mit 1 bis 12 C-Atomen im Carbonsäurerest wie Vinylpropionat, Vinyllaurat, Vinylester von alpha-verzweigten Carbonsäuren mit 9 bis 13 C-Atomen wie VeoVa9, VeoVa10, Veo-Vall; Mischpolymerisate von ein oder mehreren Vinylestern, 1 bis 50 Gew.-% Ethylen und vorzugsweise 1 bis 60 Gew.-% (Meth)Acrylsäureester von unverzweigten oder verzweigten Alkoholen mit 1 bis 15 C-Atomen, insbesonders n-Butylacrylat oder 2-Ethylhexylacrylat; und Mischpolymerisate mit 30 bis 75 Gew.-% Vinylacetat, 1 bis 30 Gew.-% Vinyllaurat oder Vinylester einer alpha-verzweigten Carbonsäure mit 9 bis 11 C-Atomen, sowie 1 bis 30 Gew.-% (Meth)Acrylsäureester von unverzweigten oder verzweigten Alkoholen mit 1 bis 15 C-Atomen, insbesonders n-Butylacrylat oder 2-Ethylhexylacrylat, welche noch 1 bis 40 Gew.-% Ethylen enthalten; Mischpolymerisate mit ein oder mehreren Vinylestern, 1 bis 50 Gew.-% Ethylen und 1 bis 60 Gew.-% Vinylchlorid; wobei die Polymerisate noch die genannten Hilfsmonomere in den genannten Mengen enthalten können, und sich die Angaben in Gew.-% auf jeweils 100 Gew.-% aufaddieren.

Besonders bevorzugt werden auch (Meth)acrylsäureester-Polymerisate, wie Mischpolymerisate von n-Butylacrylat oder 2-Ethylhexylacrylat oder Copolymerisate von Methylmethacrylat mit n-Butylacrylat und/oder 2-Ethylhexylacrylat; Styrol-Acrylsäureester-Copolymerisate mit einem oder mehreren Monomeren aus der Gruppe Methylacrylat, Ethylacrylat, Propylacrylat, n-Butylacrylat, 2-Ethylhexylacrylat; Vinylacetat-Acrylsäureester-Copolymerisate mit einem oder mehreren Monomeren aus der Gruppe Methylacrylat, Ethylacrylat, Propylacrylat, n-Butylacrylat, 2-Ethylhexylacrylat und gegebenenfalls Ethylen; Styrol-1,3-Butadien-Copolymerisate; wobei die Polymerisate noch Hilfsmonomere in den genannten Mengen enthalten können, und sich die Angaben in Gew.-% auf jeweils 100 Gew.-% aufaddieren.

Beispiele für besonders bevorzugte Comonomere für Vinylchlorid-Mischpolymerisate sind α-Olefine, wie Ethylen oder Propylen, und/oder Vinylester, wie Vinylacetat, und/oder Acrylsäureester bzw. Methacrylsäureester von Alkoholen mit 1 bis 15 C-Atomen, wie Methylacrylat, Methylmethacrylat, Ethylacrylat, Ethylmethacrylat, Propylacrylat, Propylmethacrylat, n-Butylacrylat, t-Butylacrylat, n-Butylmethacrylat, t-Butylmethacrylat, 2-Ethylhexylacrylat und/oder Fumar- und/oder Maleinsäuremono- oder -diester wie die Dimethyl, Methyl-t-butyl-, Di-n-butyl-, Di-t-Butyl- und Diethylester der Maleinsäure bzw. Fumarsäure.

Am meisten bevorzugt werden Mischpolymerisate mit Vinylacetat und 5 bis 50 Gew.-% Ethylen; oder Mischpolymerisate mit Vinylacetat, 1 bis 50 Gew.-% Ethylen und 1 bis 50 Gew.-% von einem Vinylester von α-verzweigten Monocarbonsäuren mit 9 bis 13 C-Atomen; oder Mischpolymerisate mit 30 bis 75 Gew.-% Vinylacetat, 1 bis 30 Gew.-% Vinyllaurat oder Vinylester einer alpha-verzweigten Carbonsäure mit 9 bis 11 C-Atomen, sowie 1 bis 30 Gew.-% (Meth)Acrylsäureester von unverzweigten oder verzweigten Alkoholen mit 1 bis 15 C-Atomen, welche noch 1 bis 40 Gew.-% Ethylen enthalten; oder Mischpolymerisate mit Vinylacetat, 5 bis 50 Gew.-% Ethylen und 1 bis 60 Gew.-% Vinylchlorid.

Am meisten bevorzugte Mischpolymerisate sind auch Vinylchlorid-Ethylen-Mischpolymerisate enthaltend 60 bis 98 Gew.-% Vinylchlorideinheiten und 1 bis 40 Gew.-% Ethyleneinheiten, wobei sich die Angaben in Gew.-% auf das Gesamtgewicht des Copolymerisats beziehen und sich jeweils auf 100 Gew.-% addieren. Solche Vinylchlorid-Ethylen-Copolymerisate sind aus EP 0 149 098 A2 bekannt.

Die Monomerauswahl bzw. die Auswahl der Gewichtsanteile der Comonomere erfolgt dabei so, das eine Glasübergangstemperatur Tg von -50°C bis +30°C, vorzugsweise -40°C bis +10°C, besonders bevorzugt -30°C bis 0°C resultiert. Die Glasübergangstemperatur Tg der Polymerisate kann in bekannter Weise mittels Differential Scanning Calorimetry (DSC) ermittelt werden. Die Tg kann auch mittels der Fox-Gleichung näherungsweise vorausberechnet werden. Nach Fox T. G., Bull. Am. Physics Soc. 1, 3, page 123 (1956) gilt: 1/Tg = x1/Tg1 + x2/Tg2 + ... + xn/Tgn, wobei xn für den Massebruch (Gew.-%/100) des Monomeren n steht, und Tgn die Glasübergangstemperatur in Kelvin des Homopolymeren des Monomeren n ist. Tg-Werte für Homopolymerisate sind in Polymer Handbook 2nd Edition, J. Wiley & Sons, New York (1975) aufgeführt.

Die Herstellung der Polymere auf Basis ethylenisch ungesättigter Monomere kann nach Masse- oder Lösungspolymerisations- oder vorzugsweise Emulsions- oder Suspensionspolymerisationsverfahren erfolgen. Die Emulsions- oder Suspensionspolymerisation wird im Allgemeinen in wässrigem Medium durchgeführt - wie beispielsweise in DE-A 102008043988 beschrieben. Die Polymere fallen dabei in Form von wässrigen Dispersionen an. Bei der Polymerisation können die gängigen Schutzkolloide und/oder Emulgatoren eingesetzt werden, wie in der DE-A 102008043988 beschrieben. Die Schutzkolloide können anionisch oder vorzugweise kationisch oder besonders bevorzugt nichtionisch sein. Bevorzugt sind auch Kombinationen von kationischen und nichtionischen Schutzkolloiden. Bevorzugte nichtionische Schutzkolloide sind Polyvinylalkohole. Bevorzugte kationische Schutzkolloide sind Polymere, die ein oder mehrere kationische Ladungen tragen, wie beispielsweise in E. W. Flick, Water Soluble Resins - an Industrial Guide, Noyes Publications, Park Ridge, N.J., 1991, beschrieben. Bevorzugt werden als Schutzkolloide teilverseifte oder vollverseifte Polyvinylalkohole mit einem Hydrolysegrad von 80 bis 100 Mol-%, insbesondere teilverseifte Polyvinylalkohole mit einem Hydrolysegrad von 80 bis 94 Mol-% und einer Höpplerviskosität, in 4 %-iger wässriger Lösung von 1 bis 30 mPas (Methode nach Höppler bei 20°C, DIN 53015). Die genannten Schutzkolloide sind mittels dem Fachmann bekannter Verfahren zugänglich und werden im Allgemeinen in einer Menge von insgesamt 1 bis 20 Gew.-%, bezogen auf das Gesamtgewicht der Monomere, bei der Polymerisation zugesetzt.

Die Polymere in Form von wässrigen Dispersionen können wie in der DE-A 102008043988 beschrieben in entsprechende in Wasser redispergierbare Pulver überführt werden. Entsprechendes Trocknen der Polymerdispersionen ergibt also Polymere in Form von in Wasser redispergierbaren Pulvern. Dabei wird in der Regel eine Trocknungshilfe in einer Gesamtmenge von 3 bis 30 Gew.-%, vorzugsweise 5 bis 20 Gew.-%, bezogen auf die polymeren Bestandteile der Dispersion, eingesetzt. Als Trocknungshilfe sind die vorgenannten Polyvinylalkohole bevorzugt.

Die Polymere werden vorzugsweise in Form von in Wasser redispergierbaren Pulvern eingesetzt.

Beispiele für geeignete Füllstoffe für die Baustoffformulierungen sind Quarzsand, Quarzmehl, Kalksteinmehl, Calciumcarbonat, Dolomit, Ton, Kreide, Weißkalkhydrat, Talkum oder Glimmer, Gummigranulat oder Hartfüllstoffe, wie Aluminiumsilicate, Korund, Basalt, Carbide, wie Siliciumcarbid oder Titancarbid, oder puzzolanisch reagierende Füllstoffe, wie Flugasche, Metakaolin, Mikrosilica, Diatomeenerde. Bevorzugt werden als Füllstoffe Quarzsand, Quarzmehl, Kalksteinmehl, Calciumcarbonat, Calciummagnesiumcarbonat (Dolomit), Kreide oder Weißkalkhydrat.

Bevorzugt ist auch der Einsatz von Leichtfüllstoffen. Als Leichtfüllstoffe bezeichnet man Füllstoffe mit niederem Schüttgewicht, meist von kleiner als 500 g/l. Typische Leichtfüllstoffe sind, auf synthetischer oder natürlicher Basis, Stoffe wie Mikrohohlkugeln aus Glas, Polymere wie Polystyrolkugeln, Alumosilikate, Siliciumoxid, Aluminium-Siliciumoxid, Calcium-Silikathydrat, Siliciumdioxid, Aluminium-Silikat, Mag-nesium-Silikat, Aluminium-Silikathydrat, Calcium-Aluminium-Silikat, Calcium-Silikathydrat, Aluminium-Eisen-MagnesiumSilikat, Calciummetasilikat und/oder vulkanischer Schlacke. Die Form der Leichtfüllstoffe ist nicht beschränkt und kann insbesondere eine kugel-, plättchen-, stäbchen- und/oder lamellenförmige Struktur aufweisen. Bevorzugte Leichtfüllstoffe sind Perlite, Celite, Cabosil, Circosil, Eurocell, Fillite, Promaxon, Vermex und/oder Wollastonite sowie Polystyrol.

Gegebenenfalls können noch Additive eingesetzt werden, beispielsweise zur Verbesserung von Standfestigkeit, Verarbeitbarkeit, offener Zeit oder Wasserfestigkeit. Übliche Additive für die Baustoffformulierungen sind Verdickungsmittel, beispielsweise Polysaccharide wie Celluloseether und modifizierte Celluloseether, Stärkeether, Guar Gum, Xanthan Gum, Polycarbonsäuren wie Polyacrylsäure und deren Teilester, sowie Polyvinylalkohole welche gegebenenfalls acetalisiert oder hydrophob modifiziert sein können, Casein und assoziativ wirkende Verdicker. Gängige Additive sind auch Vernetzer wie Metall-oder Halbmetalloxide, insbesondere Borsäure oder Polyborate, oder Dialdehyde, wie Glutardialdehyd. Übliche Additive sind auch Verzögerer, wie Hydroxycarbonsäuren, Dicarbonsäuren oder deren Salze, Saccharide oder Polyole, insbesondere Oxalsäure, Bernsteinsäure, Weinsäure, Gluconsäure, Zitronensäure, Sucrose, Glucose, Fructose, Sorbit oder Pentaerythrit. Weitere Additive sind auch Abbindebeschleuniger, beispielsweise Aluminiumverbindungen, Silikate, Alkalihydroxide, Carbonate oder Carbonsäuresalze. Bevorzugte Abbindebeschleuniger sind Aluminiumsalze, Aluminate, (Erd)Alkalisilikate, wie beispielsweise Wasserglas, (Erd)Alkalicarbonate oder Kaliumhydroxid, oder (Erd)-Alkalisalze von anorganischen oder organischen Säuren, wie insbesondere Salze von organischen Monocarbonsäuren. Besonders bevorzugte Abbindebeschleuniger sind Aluminiumsulfat, Alkalialuminate wie Kaliumaluminat, Aluminiumhydroxide, Kaliumcarbonat, Sulfoaluminate, wie beispielsweise Calciumsulfoaluminat, oder (Erd)Alkalisalze von Carbonaten oder Formiaten. Darüberhinaus sind noch zu nennen: Konservierungsmittel, Filmbildehilfsmittel, Dispergiermittel, Schaumstabilisatoren, Entschäumer, Verflüssiger, Fließmittel und Flammschutzmittel (z.B. Aluminiumhydroxid).

Typische Rezepturen für die Baustoffformulierungen enthalten vorzugsweise 2 bis 70 Gew.-%, besonders bevorzugt 10 bis 70 Gew.-% mineralische Bindemittel, insbesondere Zement, gegebenenfalls in Kombination mit Aluminatzement für schnellabbindende Systeme; vorzugsweise 0,001 bis 10 Gew.-%, besonders bevorzugt 0,01 bis 5 Gew.-% und am meisten bevorzugt 0,1 bis 4 Gew.-% geträgerte Staubreduzierungsmittel; vorzugsweise 1 bis 60 Gew.-%, besonders bevorzugt 1 bis 10 Gew.-% Polymere; vorzugsweise 10 bis 85 Gew.-%, besonders bevorzugt 30 bis 85 Gew.-% Füllstoffe; wobei sich die Angaben in Gew.-% auf das Trockengewicht der Baustoffformulierungen beziehen und sich insgesamt auf 100 Gew.-% addieren.

Die Staubreduzierungsmittel sind vorzugsweise zu 0,001 bis 5 Gew.-% und besonders bevorzugt zu 0,01 bis 2 Gew.-% in den Baustoffformulierungen enthalten, bezogen auf deren Trockengewicht.

Der Anteil an Additiven an den Baustoffformulierungen beträgt im Allgemeinen insgesamt 0 bis 20 Gew.-%, vorzugsweise 0,1 bis 15 Gew.-% und besonders bevorzugt 0,1 bis 10 Gew.-%, jeweils bezogen auf das Trockengewicht der Baustoffformulierungen.

Die Herstellung der Baustoffformulierungen ist an keine besondere Vorgehensweise oder Mischvorrichtung gebunden. Baustoffformulierungen sind erhältlich, indem die einzelnen Bestandteile der Baustoffformulierungen in herkömmlichen Pulvermischvorrichtungen, beispielsweise mittels Mörtel-, Beton-Mischer oder Putzmaschinen oder Rührern, vermischt und homogenisiert werden. Baustoffformulierungen sind also erhältlich, indem ein oder mehrere geträgerte Staubreduzierungsmittel, ein oder mehrere mineralische Bindemittel, gegebenenfalls ein oder mehrere Füllstoffe, gegebenenfalls ein oder mehrere Polymere und gegebenenfalls ein oder mehrere Additive gemischt werden.

Die Baustoffformulierungen liegen also in Form von Trockenmischungen vor.

In einer alternativen Vorgehensweise werden zuerst Vormischungen hergestellt. Vormischungen enthalten vorzugsweise ein oder mehrere geträgerte Staubreduzierungsmittel und eine oder mehrere Komponenten aus der Gruppe umfassend Polymere in Form von in Wasser redispergierbaren Pulvern, Füllstoffe und Additive. Zur Herstellung der Baustoffformulierungen werden dann ein oder mehrere Vormischungen mit einem oder mehreren mineralischen Bindemitteln, gegebenenfalls einem oder mehreren Füllstoffen, gegebenenfalls einem oder mehreren Polymeren und gegebenenfalls einem oder mehreren Additiven gemischt.

Die Vormischungen sind erhältlich, indem vorzugsweise ein oder mehrere geträgerte Staubreduzierungsmittel und ein oder mehrere Komponenten aus der Gruppe umfassend Polymere in Form von in Wasser redispergierbaren Pulvern, Füllstoffe und Additive miteinander gemischt werden. Das Mischen der geträgerten Staubreduzierungsmittel mit den vorgenannten Komponenten kann in den oben genannten Mischaggregaten diskontinuierlich oder kontinuierlich und im Allgemeinen bei Raumtemperatur erfolgen. Alternativ können ein oder mehrere geträgerte Staubreduzierungsmittel auch mit einem oder mehreren Polymeren in Form von wässrigen Dispersionen und gegebenenfalls einem oder mehreren Additiven gemischt werden, und gegebenenfalls nach den oben beschriebenen Methoden zur Trocknung von wässrigen Polymerdispersionen unter Bildung von Vormischungen getrocknet werden. In letztgenannten Fall werden die geträgerten Staubreduzierungsmittel vorzugsweise während der Trocknung der Polymerdispersionen, insbesondere während der Sprühtrocknung, zugegeben. Bevorzugt ist aber die Zugabe der geträgerten Staubreduzierungsmittel nach der Trocknung; insbesondere die kontinuierliche Zudosierung der geträgerten Staubreduzierungsmittel in den Sprühtrockner, nach erfolgtem Trocknungsvorgang der Polymerdispersion, gegebenenfalls zusammen mit anderen, auf herkömmliche Weise zumischbaren Zusatzstoffen, wie z.B. Antiblockmitteln, Entschäumern, Schaumstabilisatoren, Füllstoffen, Farbstoffen, Bioziden, Verdickungsmittel.

Ein Trocknen von Staubreduzierungsmitteln in Gegenwart von Polymerdispersionen und anorganischen Trägern führt im Allgemeinen nicht zu den erfindungsgemäß eingesetzten geträgerten Staubreduzierungsmitteln. Wesentlich ist also, dass zuerst die Staubreduzierungsmittel auf die anorganischen Träger aufgebracht werden und die so erhaltenen geträgerten Staubreduzierungsmittel mit den weiteren Bestandteilen der Baustoffformulierungen bzw. den weiteren Komponenten der Vormischungen gemischt werden.

Der Anteil der geträgerten Staubreduzierungsmittel an den Vormischungen ist beliebig und kann an die Anforderungen im jeweiligen Anwendungsfall angepasst werden.

Die Vormischungen können dann mit den weiteren Bestandteilen der Baustoffformulierung abgemischt werden.

Im Allgemeinen wird den erfindungsgemäßen Baustoffformulierungen vor ihrer Applikation Wasser zugesetzt. Die so erhaltenen wässrigen Baustoffformulierungen enthalten vorzugsweise 10 bis 90 Gew.-% und besonders bevorzugt 15 bis 50 Gew.-% Wasser, bezogen auf das Trockengewicht der Baustoffformulierungen.

Die erfindungsgemäßen Baustoffformulierungen eignen sich beispielsweise zur Verwendung als Fliesenkleber, Fugenmörtel, Kleber zur Herstellung von Wärmedämmverbundsystemen, Armierungsmassen, Selbstverlaufsmassen, Reparaturmörtel oder Putze, mineralische Edelputze, Dichtungsschlämmen, Skim coats oder Beton. Die anorganischen Träger sind verträglich mit den anderen Komponenten der Baustoffformulierungen und beeinträchtigen deren anwendungstechnischen Eigenschaften nicht.

Vorteilhafterweise können die geträgerten Staubreduzierungsmittel mit gängigem Equipment in die erfindungsgemäßen Baustoffformulierungen eingebracht werden, ohne dass hiefür spezielle Bedüsungs- oder Sprühmaschinen angeschafft und betrieben werden müssen. Stattdessen können die geträgerten Staubreduzierungsmittel mit den bei Herstellern von Baustofftrockenmischungen etablierten Vorrichtungen beigemischt werden. Die geträgerten Staubreduzierungsmittel sind im Allgemeinen rieselfähig und neigen nicht zum Verbacken, was deren Lagerbarkeit oder Verarbeitbarkeit, insbesondere deren exaktes und gleichmäßiges Abmischen mit den weiteren Bestandteilen der Baustofftrockenformulierungen erleichtert.

Überraschend war, dass die Staubreduzierungsmittel auch in der geträgertern Form ihre staubreduzierende Wirkung auf Baustofftrockenmischungen entfalten. Besonders überraschend war hierbei, dass die geträgerten Staubreduzierungsmittel ihre Wirkung als Staubreduzierungsmittel auf Baustofftrockenformulierungen während der Lagerung nicht verlieren, wie dies bei herkömmlichen Staubreduzierungsmitteln häufig der Fall ist. Mit den geträgerten Staubreduzierungsmitteln kann im Zuge der Lagerung überraschenderweise sogar eine Steigerung ihrer Staub reduzierenden Wirkung beobachtet werden. Die geträgerten Staubreduzierungsmittel eignen sich in besonderem Maße zur Entstaubung von Polymeren enthaltenden Baustofftrockenformulierungen. Durch Erhöhung der Menge an geträgerten Staubreduzierungsmitteln in den Baustoffformulierungen kann deren Staub reduzierende Wirkung weiter gesteigert werden.

Die folgenden Beispiele dienen der detaillierten Erläuterung der Erfindung und sind in keiner Weise als Einschränkung zu verstehen.

### Eigenschaften der eingesetzten anorganischen Träger:

Methode zur Bestimmung der Porosität der anorganische Träger: Porosität wurde mittels Quecksilberporosimetrie mit dem Quecksilber-Porosimeter AutoPore IV der Firma Micrometrics in Anlehnung an ISO 15901 bestimmt, wobei als Fülldruck 10,3 kPa angewendet wurden (Quecksilberporosimetrie).

### Calciumcarbonat:

Porosität von 57,8% (bestimmt mittels Quecksilberporosimetrie);
Anteil der Poren mit einem Porendurchmesser von ≥ 2000 nm betrug 35% und der Anteil der Poren mit einem Porendurchmesser von ≥ 20000 nm betrug 15%, jeweils bezogen auf die Gesamtzahl der Poren des Calciumcarbonats (bestimmt mittels Quecksilberporosimetrie);
mittlerer Teilchendurchmesser dpₘᵢₜₜₑₗ von 4,5 µm;
BET-Oberfläche von 2,1 m²/g (bestimmt nach DIN EN ISO 9277:2003-5).

Sipernat 22 (Handelsname der Evonik Industries):
Porosität von 85,7% (bestimmt mittels Quecksilberporosimetrie);
Anteil der Poren mit einem Porendurchmesser von ≥ 2000 nm betrug 43% und der Anteil der Poren mit einem Porendurchmesser von ≥ 20000 nm betrug 32%, jeweils bezogen auf die Gesamtzahl der Poren des Sipernat 22 (bestimmt mittels Quecksilberporosimetrie);
BET-Oberfläche von 190 m²/g (bestimmt nach DIN EN ISO 9277:2003-5).

Dicalite (Handelsname der Firma Dicalite Europe):
Porosität von 88,7% (bestimmt mittels Quecksilberporosimetrie);
Anteil der Poren mit einem Porendurchmesser von ≥ 2000 nm betrug 96% und der Anteil der Poren mit einem Porendurchmesser von ≥ 20000 nm betrug 55%, jeweils bezogen auf die Gesamtzahl der Poren des Dicalite (bestimmt mittels Quecksilberporosimetrie);
BET-Oberfläche von 1,8 m²/g (bestimmt nach DIN EN ISO 9277:2003-5).

### Herstellung von geträgerten Staubreduzierungsmitteln (Entstauber) :

**Entstauber 1:** mit Calciumcarbonat als Träger (nicht erfindungsgemäß):
   400 g Calciumcarbonat wurden mit 100 g Siliconöl AK 10 (Dimethylpolysiloxan (CH₃) ₃Si [OSi (CH₃) ₂]₈₋₉OSi (CH₃) mit einer Viskosität von 10 mm²/s, mittleres MW 800 g/mol; Handelsname der Firma Wacker Chemie) in einem Paddel-Mischer unter Rühren vermischt. Der so erhaltene Entstauber 1 enthielt 75 Gew.-% Calciumcarbonat, bezogen auf das Gesamtgewicht des Entstaubers 1.
**Entstauber 2:** mit gefällter Kieselsäure als Träger (erfindungsgemäß):
   Zu 100 g Sipernat 22 wurden über einen Tropftrichter 100 g Siliconöl AK 10 unter Rühren zugegeben.
**Entstauber 3:** mit gefällter Kieselsäure als Träger (erfindungsgemäß):
   Zu 100 g Sipernat 22 wurden über einen Tropftrichter 200 g Siliconöl AK 10 unter Rühren zugegeben.
**Entstauber 4:** mit gefällter Kieselsäure als Träger (erfindungsgemäß):
   Zu 100 g Sipernat 22 wurden unter Rühren über einen Tropftrichter 200 g Siliconöl AK 350 (Dimethylpolysiloxan (CH₃)₃Si(OSi(CH₃)₂]₁₀₀OSi(CH₃)₃ mit einer Viskosität von 350 mm²/s, mittleres MW ca. 7000 g/mol; Handelsname der Firma Wacker Chemie) zugegeben.
**Entstauber 5:** mit Dicalite als Träger (erfindungsgemäß) :
   Zu 100 g Dicalite wurden über eine Sprühdüse (Hobbygartenbedarf) 200 g Siliconöl AK 10 unter Rühren beaufschlagt.
**Entstauber 6:** mit Dicalite als Träger (erfindungsgemäß):
   Zu 100 g Dicalite wurden über eine Sprühdüse (Hobbygartenbedarf) 100 g Siliconöl AK 10 unter Rühren beaufschlagt.
**Entstauber 7:** mit Dicalite als Träger (erfindungsgemäß):
   Zu 100 g Dicalite wurden über eine Sprühdüse (Hobbygartenbedarf) 100 g Siliconöl AK 350 unter Rühren beaufschlagt.
**Entstauber 8:** mit Dicalite als Träger (erfindungsgemäß):
   Zu 100 g Dicalite wurden über einen Tropftrichter 200 g Rapsöl/Rüböl-Raffinat (Handelsnahme der D.L.R. Warenhandelsgesellschaft mbH) unter Rühren zugegeben.
**Entstauber 9:** mit Dicalite als Träger (erfindungsgemäß):
   Zu 100 g Dicalite wurden über einen Tropftrichter 200 g Catenex T121 (Mineralöl; Handelsnahme der Shell AG) unter Rühren zugegeben.

### Rezepturen der Baustoffformulierungen:

**Formulierung 1:** Trockenmörtelrezeptur:

| | |
|---|---|
| Zement CEM I 42,5 | 336,0 Teile |
| Quarzsand (0,1 - 0,4 mm) | 620,2 Teile |
| Celluloseether | 3,8 Teile |

ca. 40 Teile Dispersionspulver VINNAPAS 8034 H (Polyvinylalkohol stabilisiertes Vinylchlorid-Vinyllaurat-Ethylen-Copolymer; Handelsname der Firma Wacker Chemie), welchem gegebenenfalls 1% bis 30% geträgertes Staubreduzierungsmittel zugemischt war.
**Formulierung 2:** C1-Fliesenkleberrezeptur:

| | |
|---|---|
| Zement CEM I 42,5 N | 420 Teile |
| Quarzsand (dpₘᵢₜₜₑₗ 0,2 mm) | 480 Teile |
| Calciumcarbonat (dpₘᵢₜₜₑₗ 0,065 mm) | 80 Teile |
| Celluloseether | 5 Teile |
| Calciumformiat | 5 Teile |

10 Teile Dispersionspulver VINNAPAS 5044 N (Polyvinylalkohol stabilisiertes Vinylacetat-Ethylen-Copolymer; Handelsname der Firma Wacker Chemie), gegebenenfalls 10 Teile geträgertes Staubreduzierungsmittel.
**Formulierung 3:** C2-Fliesenkleberrezeptur:

| | |
|---|---|
| Zement CEM I 52,5 N | 400 Teile |
| Quarzsand (dpₘᵢₜₜₑₗ 0,17 mm) | 270 Teile |
| Quarzsand (dpₘᵢₜₜₑₗ 0,33 mm) | 275 Teile |
| Celluloseether | 5 Teile |
| Calciumformiat | 5 Teile |

45 Teile Dispersionspulver VINNAPAS 5044 N (Polyvinylalkohol stabilisiertes Vinylacetat-Ethylen-Copolymer; Handelsname der Firma Wacker Chemie), gegebenenfalls 10 Teile geträgertes Staubreduzierungsmittel.

### Herstellung der Baustoffformulierungen:

### Verfahren A:

Die einzelnen Komponenten der jeweiligen Rezeptur der Baustoffformulierung wurden in ein geschlossenes Gebinde eingewogen (Gesamtmenge ca. 3 bis 4 kg), so dass kein Staub entweichen konnte. Die Mischung wurde zusammen mit einer 1 kg Stahlkugel auf ein Walzenmischer-Mischaggregat gegeben und eine Stunde gemischt. Die Rezepturen der einzelnen (Vergleichs)beispiele sind im folgenden spezifiziert.

### Verfahren B:

Es wurde zuerst eine Vormischung hergestellt, indem das jeweilige geträgerte Staubreduzierungsmittel (Entstauber) zum jeweiligen VINNAPAS Dispersionspulver in einem geschlossenen Paddelmischer zugemischt wurde.

Diese Vormischung wurde anschließend mit den weiteren Komponenten der der jeweiligen Rezeptur der Baustoffformulierung in dem oben genannten Walzenmischer-Mischaggregat gemischt.

Die Rezepturen der einzelnen (Vergleichs)beispiele sind im folgenden spezifiziert.

### (Vergleichs)beispiele 1 bis 11 und 16 bis 18 (VBsp.1 bis Bsp.11 und Bsp.16 bis Bsp. 18):

Die Baustoffformulierungen der VBsp.1 bis Bsp.11 und Bsp. 16 bis Bsp. 18 basieren auf Formulierung 1. Die gegebenenfalls enthaltenen Mengen an Dispersionspulver und geträgertem Staubreduzierungsmittel (Entstauber) sowie die Verfahren zur Herstellung der Baustoffformulierungen werden im folgenden spezifiziert.

### Vergleichsbeispiel 1 (VBsp.1):

Enthielt 4 Gew.-% Dispersionspulver, aber kein geträgertes Staubreduzierungsmittel (Entstauber), wobei sich die Angabe in Gew.-% auf das Gesamtgewicht der Baustoffformulierung des VBsp.1 bezieht. Die Baustoffformulierung wurde nach Verfahren A hergestellt.

### Vergleichsbeispiel 2 (VBsp.2):

Enthielt 4 Gew.-% Dispersionspulver, bezogen auf das Gesamtgewicht der Baustoffformulierung des VBsp.2.

Die Baustoffformulierung wurde nach Verfahren B hergestellt. Die Vormischung enthielt 5 Gew.-% Entstauber 1, bezogen auf das Gesamtgewicht der Vormischung. Die Baustoffformulierung enthielt also 0,05 Gew.-% Siliconöl AK 10, bezogen auf das Gesamtgewicht der Baustoffformulierung des VBsp.2.

### Vergleichsbeispiel 3 (VBsp.3):

Enthielt 4 Gew.-% Dispersionspulver, bezogen auf das Gesamtgewicht der Baustoffformulierung des VBsp.3.

Die Baustoffformulierung wurde nach Verfahren B hergestellt. Die Vormischung enthielt 10 Gew.-% Entstauber 1, bezogen auf das Gesamtgewicht der Vormischung. Die Baustoffformulierung enthielt also 0,1 Gew.-% Siliconöl AK 10, bezogen auf das Gesamtgewicht der Baustoffformulierung des VBsp.3.

### Beispiel 4 (Bsp.4):

Enthielt 4 Gew.-% Dispersionspulver, bezogen auf das Gesamtgewicht der Baustoffformulierung des Bsp.4.

Die Baustoffformulierung wurde nach Verfahren B hergestellt. Die Vormischung enthielt 2 Gew.-% Entstauber 6, bezogen auf das Gesamtgewicht der Vormischung. Die Baustoffformulierung enthielt also 0,04 Gew.-% Siliconöl AK 10, bezogen auf das Gesamtgewicht der Baustoffformulierung des Bsp.4.

### Beispiel 5 (Bsp.5):

Enthielt 4 Gew.-% Dispersionspulver, bezogen auf das Gesamtgewicht der Baustoffformulierung des Bsp.5.

Die Baustoffformulierung wurde nach Verfahren B hergestellt. Die Vormischung enthielt 4 Gew.-% Entstauber 6, bezogen auf das Gesamtgewicht der Vormischung. Die Baustoffformulierung enthielt also 0,08 Gew.-% Siliconöl AK 10, bezogen auf das Gesamtgewicht der Baustoffformulierung des Bsp.5.

### Beispiel 6 (Bsp.6):

Enthielt 4 Gew.-% Dispersionspulver, bezogen auf das Gesamtgewicht der Baustoffformulierung des Bsp.6.

Die Baustoffformulierung wurde nach Verfahren B hergestellt. Die Vormischung enthielt 3 Gew.-% Entstauber 5, bezogen auf das Gesamtgewicht der Vormischung. Die Baustoffformulierung enthielt also 0,08 Gew.-% Siliconöl AK 10, bezogen auf das Gesamtgewicht der Baustoffformulierung des Bsp.6.

### Beispiel 7 (Bsp.7):

Enthielt 4 Gew.-% Dispersionspulver, bezogen auf das Gesamtgewicht der Baustoffformulierung des Bsp.7.

Die Baustoffformulierung wurde nach Verfahren B hergestellt. Die Vormischung enthielt 30 Gew.-% Entstauber 5, bezogen auf das Gesamtgewicht der Vormischung. Die Baustoffformulierung enthielt also 0,8 Gew.-% Siliconöl AK 10, bezogen auf das Gesamtgewicht der Baustoffformulierung des Bsp.7.

### Beispiel 8 (Bsp.8):

Enthielt 4 Gew.-% Dispersionspulver, bezogen auf das Gesamtgewicht der Baustoffformulierung des Bsp.8.

Die Baustoffformulierung wurde nach Verfahren B hergestellt. Die Vormischung enthielt 3 Gew.-% Entstauber 7, bezogen auf das Gesamtgewicht der Vormischung. Die Baustoffformulierung enthielt also 0,06 Gew.-% Siliconöl AK 350, bezogen auf das Gesamtgewicht der Baustoffformulierung des Bsp.8.

### Beispiel 9 (Bsp.9):

Enthielt 4 Gew.-% Dispersionspulver, bezogen auf das Gesamtgewicht der Baustoffformulierung des Bsp.9.

Die Baustoffformulierung wurde nach Verfahren B hergestellt. Die Vormischung enthielt 4 Gew.-% Entstauber 7, bezogen auf das Gesamtgewicht der Vormischung. Die Baustoffformulierung enthielt also 0,08 Gew.-% Siliconöl AK 350, bezogen auf das Gesamtgewicht der Baustoffformulierung des Bsp.9.

### Beispiel 10 (Bsp.10):

Enthielt 4 Gew.-% Dispersionspulver, bezogen auf das Gesamtgewicht der Baustoffformulierung des Bsp.10.

Die Baustoffformulierung wurde nach Verfahren B hergestellt. Die Vormischung enthielt 3 Gew.-% Entstauber 8, bezogen auf das Gesamtgewicht der Vormischung. Die Baustoffformulierung enthielt also 0,08 Gew.-% Rapsöl/Rüböl-Raffinat, bezogen auf das Gesamtgewicht der Baustoffformulierung des Bp.10.

### Beispiel 11 (Bsp.11):

Enthielt 4 Gew.-% Dispersionspulver, bezogen auf das Gesamtgewicht der Baustoffformulierung des Bsp.11.

Die Baustoffformulierung wurde nach Verfahren B hergestellt. Die Vormischung enthielt 30 Gew.-% Entstauber 8, bezogen auf das Gesamtgewicht der Vormischung. Die Baustoffformulierung enthielt also 0,8 Gew.-% Rapsöl/Rüböl-Raffinat, bezogen auf das Gesamtgewicht der Baustoffformulierung des Bsp.11.

### Beispiel 12 (Bsp.12):

Die Baustoffformulierung basiert auf Formulierung 2 und enthielt 1 Gew.-% Dispersionspulver und 1 Gew.-% Entstauber 5, wobei sich die Angaben in Gew.-% auf das Gesamtgewicht der Baustoffformulierung des Bsp.12 beziehen. Die Baustoffformulierung enthielt also 0,67 Gew.-% Siliconöl AK 10, bezogen auf das Gesamtgewicht der Baustoffformulierung des Bp.12. Die Baustoffformulierung wurde nach Verfahren A hergestellt.

### Vergleichsbeispiel 13 (VBsp.13):

Analog zu Beispiel 12, mit dem Unterschied, dass kein Entstauber 5 eingesetzt wurde.

### Beispiel 14 (Bsp.14):

Die Baustoffformulierung basiert auf Formulierung 3 und enthielt 4,5 Gew.-% Dispersionspulver und 1 Gew.-% Entstauber 5, wobei sich die Angaben in Gew.-% auf das Gesamtgewicht der Baustoffformulierung des Bsp.14 beziehen. Die Baustoffformulierung enthielt also 0,67 Gew.-% Siliconöl AK 10, bezogen auf das Gesamtgewicht der Baustoffformulierung des Bsp.14. Die Baustoffformulierung wurde nach Verfahren A hergestellt.

### Vergleichsbeispiel 15 (VBsp.15):

Analog zu Beispiel 14, mit dem Unterschied, dass kein Entstauber 5 eingesetzt wurde.

### Beispiel 16 (Bsp.16):

Es wurde eine Formulierung 1 eingesetzt, die 4 Gew.-% Dispersionspulver enthielt, bezogen auf das Gesamtgewicht der Baustoffformulierung des Bsp.16.

Die Baustoffformulierung wurde nach Verfahren B hergestellt. Die Vormischung enthielt 4 Gew.-% Entstauber 2, bezogen auf das Gesamtgewicht der Vormischung. Die Baustoffformulierung enthielt also 0,08 Gew.-% Siliconöl AK 10, bezogen auf das Gesamtgewicht der Baustoffformulierung des Bsp.16.

### Beispiel 17 (Bsp.17):

Es wurde eine Formulierung 1 eingesetzt, die 4 Gew.-% Dispersionspulver enthielt, bezogen auf das Gesamtgewicht der Baustoffformulierung des Bsp.17.

Die Baustoffformulierung wurde nach Verfahren B hergestellt. Die Vormischung enthielt 3 Gew.-% Entstauber 9, bezogen auf das Gesamtgewicht der Vormischung. Die Baustoffformulierung enthielt also 0,08 Gew.-% Catenex T121, bezogen auf das Gesamtgewicht der Baustoffformulierung des Bp.17.

### Beispiel 18 (Bsp.18):

Es wurde eine Formulierung 1 eingesetzt, die 4 Gew.-% Dispersionspulver enthielt, bezogen auf das Gesamtgewicht der Baustoffformulierung des Bsp.18.

Die Baustoffformulierung wurde nach Verfahren B hergestellt, Die Vormischung enthielt 30 Gew.-% Entstauber 9, bezogen auf das Gesamtgewicht der Vormischung. Die Baustoffformulierung enthielt also 0,8 Gew.-% Catenex T121, bezogen auf das Gesamtgewicht der Baustoffformulierung des Bsp.18.

### Austestung der Baustoffformulierungen:

Die Baustoffformulierungen wurden hinsichtlich ihres Staubungsverhaltens untersucht. Dazu wurden 1000 g der jeweiligen Baustoffformulierung vorsichtig in einen Toni-Mischer eingefüllt. Ein Staubsammelmessgerät (Model Gilian 5000 mit Rotamesser und Staubsammelkopf, Firma Deha Haan & Wittmer GmbH) wurde am Gefäßrand, aber innerhalb des Rührgefäßes des Toni-Mischers angebracht. Anschließend wurde der Toni-Mischer eingeschaltet und für 2 Minuten auf Stufe 2 gerührt, wobei sichtbar Staub aufgewirbelt wurde. Währenddessen wurde über das Staubsammelmessgerät Staub detektiert. Die Pumpe des Staubsammelmessgeräts war auf eine Durchflussrate von 3,5 1/min eingestellt und saugte die Luft aus seiner Umgebung an. Der vom Staubsammelmessgerät angesaugte Staub scheidete sich an einem Filter (Macherey-Nagel Typ MN 85/90 Durchmesser 37 mm, Ref.-Nr. 406 0037) ab. Die auf dem Filter angesammelte Staubmenge wurde nach der Beendigung der Messung, d.h. nach dem 2 minütigen Rühren des Toni-Mischers, gravimetrisch bestimmt sowie mittels Thermogravimetrie (DIN EN ISO 11358) hinsichtlich der anorganischen bzw. organischen Anteile analysiert.

Zur Untersuchung des Einflusses der Lagerung der Baustoffformulierungen auf die Staubentwicklung wurden die Baustoffformulierungen der (Vergleichs)beispiele 12 bis 15 einer zusätzlichen Austestung unterzogen. Von diesen Baustoffformulierungen wurde jeweils eine Probe direkt nach ihrer oben beschriebenen Herstellung für 56 Tage bei 40°C gelagert. Anschließend wurde die im vorhergehenden beschriebene Austestung zur Ermittlung des Staubungsverhaltens durchgeführt.

Die Ergebnisse der Austestung sind in den Tabellen 1 und 2 aufgelistet. Die darin aufgeführten Angaben bezüglich der Staubentwicklung in ppm wurden aus der auf dem Filter angesammelten Staubmenge gravimetrisch bestimmt und beziehen sich auf die 1000 g der jeweiligen Baustoffformulierung, die in den Toni-Mischer gegeben wurde.

**Tabelle 1: Austestung der Staubentwicklung mit Formulierung 1:**

| | Staub [ppm] | Staub-Reduktion^{a)} [%] | Organischer Anteil am Staub^{b)} [%] |
|---|---|---|---|
| VBsp.1 | 27,7 | - | 3,0 |
| VBsp.2 | 22,3 | 20 | 2,0 |
| VBsp.3 | 14,1 | 50 | 2,0 |
| Bsp.4 | 22,0 | 20 | 2,1 |
| Bsp.5 | 13,1 | 50 | 2,2 |
| Bsp.6 | 10,4 | 60 | 2,0 |
| Bsp.7 | 1,3 | 95 | nicht bestimmbar^{c)} |
| Bsp.8 | 23,8 | 15 | 2,0 |
| Bsp.9 | 20,9 | 25 | 2,2 |
| Bsp.10 | 13,2 | 20 | nicht bestimmt |
| Bsp.11 | 1,3 | 90 | nicht bestimmt |
| Bsp.16 | 17,3 | 40 | 2,2 |
| Bsp.17 | 8,2 | 70 | nicht bestimmt |
| Bsp.18 | 1,1 | 95 | nicht bestimmbar^{c)} |

| | | | |
|---|---|---|---|
| a) Gibt das Ausmaß der verminderten Staubbildung des jeweiligen Beispiels an, bezogen auf die in VBsp.1 bestimmte Staubmenge. b) jeweils bezogen auf die gesamte nachgewiesene Staubmenge. c) Die Staubmenge war so gering, dass sie nicht bestimmt werden konnte. | | | |

**Tabelle 2: Austestung der Staubentwicklung mit den Formulierungen 2 bzw. 3:**

| | Staub [ppm] | | Staub-Reduktion^{a)} [%] | | Organischer Anteil am Staub^{b)} [%] | |
|---|---|---|---|---|---|---|
| | o.L.^{c)} | 56 d^{d)} | o.L.^{c)} | 56 d^{d)} | o.L.^{c)} | 56 d^{d)} |
| Bsp.12 | 1,6 | 1,5 | 80 | 95 | 3,1 | 1,4 |
| VBsp.13 | 8,7 | 32,6 | | | 5,2 | 1,5 |
| Bp.14 | 3,6 | 1,7 | 80 | >95 | 6,3 | 3,3 |
| VBsp.15 | 16,9 | 62,8 | | | 9,7 | 2,2 |

| | | | | | | |
|---|---|---|---|---|---|---|
| a) Gibt das Ausmaß der verminderten Staubbildung des jeweiligen Beispiels an, bezogen auf die in VBsp.1 bestimmte Staubmenge. b) jeweils bezogen auf die gesamte nachgewiesene Staubmenge. c) o.L.: ohne Lagerung: die Austestung erfolgte direkt nach Herstellung der Baustoffformulierung. d) 56 d: 56 Tage: die Baustoffformulierung wurde im Anschluss an ihre Herstellung für 56 Tage bei 40°C gelagert und erst anschließend der Austestung unterworfen. | | | | | | |

## Patentansprüche

1. Verfahren zur Herstellung von Baustoffformulierungen in Form von Trockenmischungen, **dadurch gekennzeichnet, dass**
(a) ein oder mehrere Staubreduzierungsmittel auf einen oder mehrere anorganische Träger aufgebracht werden,
wodurch geträgerte Staubreduzierungsmittel gebildet werden, wobei die anorganischen Träger eine Porosität von ≥ 65% aufweisen, und
wobei die Staubreduzierungsmittel ausgewählt werden aus der Gruppe bestehend aus Fettsäuren, Fettsäurederivaten, natürlichen Ölen, Kohlenwasserstoffen und Polysiloxanen bestehend aus Einheiten der allgemeinen Formel R_{c}Si(OR')_{d}(OH)ₑO₍₄-_{c-d-e)/2} mit c = 0 bis 3, d = 0 bis 3, e = 0 bis 3, worin die Summe c+d+e je Einheit höchstens 3,5 ist, worin jeweils R gleich oder verschieden ist und verzweigte oder unverzweigte, gegebenenfalls substituierte Kohlenwasserstoffreste mit 1 bis 22 Kohlenstoffatomen, R' gleiche oder verschiedene, gegebenenfalls substituierte Kohlenwasserstoffreste mit jeweils 1 bis 6 Kohlenstoffatomen bedeutet, und
(b) die in Schritt (a) erhaltenen geträgerten Staubreduzierungsmittel mit einem oder mehreren mineralischen Bindemitteln, einem oder mehreren Polymeren auf Basis von einem oder mehreren ethylenisch ungesättigten Monomeren, gegebenenfalls einem oder mehreren Füllstoffen und gegebenenfalls einem oder mehreren Additiven gemischt werden.

2. Verfahren zur Herstellung von Baustoffformulierungen nach Anspruch 1, **dadurch gekennzeichnet, dass** zuerst Vormischungen hergestellt werden durch Mischen von einem oder mehreren geträgerten Staubreduzierungsmitteln
und einer oder mehreren Komponenten aus der Gruppe umfassend Polymere auf Basis von einem oder mehreren ethylenisch ungesättigten Monomeren, Füllstoffe und Additive und
die so erhaltenen Vormischungen mit einem oder mehreren mineralischen Bindemitteln, gegebenenfalls einem oder mehreren Füllstoffen, gegebenenfalls einem oder mehreren Polymeren auf Basis von einem oder mehreren ethylenisch ungesättigten Monomeren und gegebenenfalls einem oder mehreren Additiven gemischt werden.

3. Verfahren zur Herstellung von Baustoffformulierungen nach Anspruch 1 oder 2, **dadurch gekennzeichnet, dass** ein oder mehrere Staubreduzierungsmittel ausgewählt werden aus der Gruppe bestehend aus
Polysiloxanen der allgemeinen Formel R"'ₐ R'' ₃₋ₐ SiO(SiR''₂ O)ₙSiR''₃₋ₐ R'''ₐ, worin die einzelnen R'' unabhängig voneinander die in Anspruch 1 für R und (OR') angegebenen Bedeutungen annehmen können, R'" für OH steht, a einen ganzzahligen Wert zwischen 0 und 3 bedeutet und n einen ganzzahligen Wert zwischen 0 und 500 annimmt,
Fettsäuren oder Fettsäurederivaten ausgewählt aus der Gruppe umfassend gesättigte und ungesättigte Fettsäuren mit 8 bis 22 C-Atomen, deren Metallseifen, deren Amide sowie deren Ester mit einwertigen Alkoholen mit 1 bis 14 C-Atomen, mit Glykol, mit Polyglykol, mit Polyalkylenglykol, mit Glycerin, mit Mono-, Di- oder Triethanolamin, mit Monosacchariden und mit Polyhydroxyverbindungen,
natürlichen Ölen enthaltend ein oder mehrere Carbonsäuren oder deren Ester, wobei die Carbonsäuren 4 bis 28 Kohlenstoffatome und die Alkohole 1 bis 12 Kohlenstoffatome enthalten, und
Kohlenwasserstoffen mit Siedepunkten oder Siedebereichen zwischen 100 bis 400°C (bei einem Druck von 1 bar) und mehr als 10 Kohlenstoffatomen.

4. Verfahren zur Herstellung von Baustoffformulierungen nach Anspruch 1 bis 3, **dadurch gekennzeichnet, dass** ein oder mehrere Staubreduzierungsmittel ausgewählt werden aus der Gruppe bestehend aus Dimethylpolysiloxane, mit Trimethylsiloxygruppen endblockierte Dimethylpolysiloxane und Dimethylpolysiloxane mit Si-OH-Gruppen in den endständigen Einheiten.

5. Verfahren zur Herstellung von Baustoffformulierungen nach Anspruch 1 bis 4, **dadurch gekennzeichnet, dass** die anorganischen Träger auf Carbonaten, Silicaten oder sonstigen anorganischen Oxiden oder Mineralien basieren.

6. Verfahren zur Herstellung von Baustoffformulierungen nach Anspruch 1 bis 5, **dadurch gekennzeichnet, dass** die anorganischen Träger ausgewählt werden aus der Gruppe umfassend Magnesiumcarbonat, Calciumcarbonat, Quarz, Cristobalit, Kieselsäure, Diatomeenerde, Kieselgur, Kieselerde, Magnesiumhydrosilicate, Microsilica, Perlit, Dicalit, Zeolithe, Poraver (Schaumglas), Titandioxid, Tonerde, Bleicherden, Kaolin, Talkum, Glimmer, aktiviertes Aluminiumoxid, Vermiculite und Phosphate.

7. Verfahren zur Herstellung von Baustoffformulierungen nach Anspruch 1 bis 6, **dadurch gekennzeichnet, dass** in den anorganischen Trägern der Anteil der Poren mit einem Porendurchmesser von ≥ 2000 nm ≥ 10% beträgt, bezogen auf die Gesamtzahl der Poren der anorganischen Träger (bestimmt mittels Quecksilberporosimetrie).

8. Verfahren zur Herstellung von Baustoffformulierungen nach Anspruch 1 bis 7, **dadurch gekennzeichnet, dass** in den anorganischen Trägern der Anteil der Poren mit einem Porendurchmesser von ≥ 20000 nm ≥ 5% beträgt, bezogen auf die Gesamtzahl der Poren der anorganischen Träger (bestimmt mittels Quecksilberporosimetrie).

9. Verfahren zur Herstellung von Baustoffformulierungen nach Anspruch 1 bis 8, **dadurch gekennzeichnet, dass** die anorganischen Träger ein Dichte von 50 bis 300 g/dm³ haben (bestimmt nach DIN EN ISO 787-10).

10. Verfahren zur Herstellung von Baustoffformulierungen nach Anspruch 1 bis 9, **dadurch gekennzeichnet, dass** die geträgerten Staubreduzierungsmittel 5 bis 90 Gew.-% anorganische Träger enthalten, bezogen auf das Gesamtgewicht der Staubreduzierungsmittel und anorganischen Träger.

11. Verfahren zur Herstellung von Baustoffformulierungen nach Anspruch 1 bis 10, **dadurch gekennzeichnet, dass** die geträgerten Staubreduzierungsmittel 10 bis 95 Gew.-% Staubreduzierungsmittel enthalten, bezogen auf das Gewicht der anorganischen Träger.

12. Verfahren zur Herstellung von Baustoffformulierungen nach Anspruch 1 bis 11, **dadurch gekennzeichnet, dass** die Baustoffformulierungen 2 bis 70 Gew.-% mineralische Bindemittel, 0,001 bis 10 Gew.-% geträgerte Staubreduzierungsmittel, 1 bis 60 Gew.-% Polymere, gegebenenfalls 10 bis 85 Gew.-% Füllstoffe enthalten, wobei sich die Angaben in Gew.-% auf das Trockengewicht der Baustoffformulierungen beziehen und sich insgesamt auf 100 Gew.-% addieren.

13. Verfahren zur Herstellung von Baustoffformulierungen nach Anspruch 1 bis 12, dadurch gekenntzeichnet, dass die Staubreduzierungsmittel zu 0,001 bis 5 Gew.-% in den Baustoffformulierungen enthalten sind, bezogen auf das Trockengewicht der Baustoffformulierungen.

14. Baustoffformulierungen in Form von Trockenmischungen erhältlich nach einem der Verfahren der Ansprüche 1 bis 13.

15. Verwendung der Verfahrensprodukte aus einem der Ansprüche 1 bis 13 in Fliesenkleber, Fugenmörtel, Kleber zur Herstellung von Wärmedämmverbundsystemen, Armierungsmassen, Selbstverlaufsmassen, Reparaturmörtel oder Putze, mineralische Edelputze, Dichtungsschlämmen, Skim coats oder Beton.

## Claims

1. Method for producing building material formulations in the form of dry mixes, **characterized in that**
(a) one or more dust reducer agents are applied to one or more inorganic supports, to form supported dust reducer agents,
the inorganic supports having a porosity of ≥ 65%, and
the dust reducer agents being selected from the group consisting of fatty acids, fatty acid derivatives, natural oils, hydrocarbons, and polysiloxanes consisting of units of the general formula R_{c}Si(OR')_{d}(OH)ₑO_{(4-c-d-e)/2} with c = 0 to 3, d = 0 to 3, e = 0 to 3, in which the sum c+d+e per unit is not more than 3.5, in which in each case R is identical or different and denotes branched or unbranched, optionally substituted hydrocarbon radicals having 1 to 22 carbon atoms, and R' denotes identical or different, optionally substituted hydrocarbon radicals having in each case 1 to 6 carbon atoms, and
(b) the supported dust reducer agents obtained in step (a) are mixed with one or more mineral binders, one or more polymers based on one or more ethylenically unsaturated monomers, optionally one or more fillers, and optionally one or more additives.

2. Method for producing building material formulations according to Claim 1, **characterized in that** first of all premixes are produced by mixing one or more supported dust reducer agents and one or more components from the group encompassing polymers based on one or more ethylenically unsaturated monomers, fillers, and additives, and
the resulting premixes are mixed with one or more mineral binders, optionally one or more fillers, optionally one or more polymers based on one or more ethylenically unsaturated monomers, and optionally one or more additives.

3. Method for producing building material formulations according to Claim 1 or 2, **characterized in that** one or more dust reducer agents are selected from the group consisting of polysiloxanes of the general formula R"' ₐ R" ₃₋ₐ SiO(SiR"₂O) ₙSiR" ₃₋ₐ R"'ₐ, in which the individual radicals R" independently of one another may adopt the definitions indicated for R and (OR') in claim 1, R"' is OH, a denotes an integral value between 0 and 3, and n adopts an integral value between 0 and 500,
fatty acids or fatty acid derivatives selected from the group encompassing saturated and unsaturated fatty acids having 8 to 22 C atoms, their metal soaps, their amides, and their esters with monohydric alcohols having 1 to 14 C atoms, with glycol, with polyglycol, with polyalkylene glycol, with glycerol, with mono-, di-, or triethanolamine, with monosaccharides, and with polyhydroxy compounds,
natural oils comprising one or more carboxylic acids or their esters, the carboxylic acids containing 4 to 28 carbon atoms and the alcohols containing 1 to 12 carbon atoms, and
hydrocarbons having boiling points or boiling ranges between 100 to 400°C (under a pressure of 1 bar) and more than 10 carbon atoms.

4. Method for producing building material formulations according to Claim 1 to 3, **characterized in that**
one or more dust reducer agents are selected from the group consisting of dimethylpolysiloxanes, dimethylpolysiloxanes endblocked with trimethylsiloxy groups, and dimethylpolysiloxanes having Si-OH groups in the terminal units.

5. Method for producing building material formulations according to Claim 1 to 4, **characterized in that** the inorganic supports are based on carbonates, silicates, or other inorganic oxides or minerals.

6. Method for producing building material formulations according to Claim 1 to 5, **characterized in that** the inorganic supports are selected from the group encompassing magnesium carbonate, calcium carbonate, quartz, cristobalite, silica, diatomaceous earth, kieselguhr, siliceous earth, magnesium hydrosilicates, microsilica, perlite, Dicalite, zeolites, Poraver (foam glass), titanium dioxide, alumina, bleaching earths, kaolin, talc, mica, activated aluminum oxide, vermiculites, and phosphates.

7. Method for producing building material formulations according to Claim 1 to 6, **characterized in that** in the inorganic supports the fraction of pores having a pore diameter of ≥ 2000 nm ≥ 10%, based on the total number of pores in the inorganic supports (determined by means of mercury porosimetry).

8. Method for producing building material formulations according to Claim 1 to 7, **characterized in that** in the inorganic supports the fraction of pores having a pore diameter of ≥ 20 000 nm ≥ 5%, based on the total number of pores in the inorganic supports (determined by means of mercury porosimetry).

9. Method for producing building material formulations according to Claim 1 to 8, **characterized in that** the inorganic supports have a density of 50 to 300 g/dm³ (determined in accordance with DIN EN ISO 787-10).

10. Method for producing building material formulations according to Claim 1 to 9, **characterized in that** the supported dust reducer agents comprise 5 to 90 wt% of inorganic supports, based on the total weight of the dust reducer agents and inorganic supports.

11. Method for producing building material formulations according to Claim 1 to 10, **characterized in that** the supported dust reducer agents comprise 10 to 95 wt% of dust reducer agents, based on the weight of the inorganic supports.

12. Method for producing building material formulations according to Claim 1 to 11, **characterized in that** the building material formulations comprise 2 to 70 wt% of mineral binders, 0.001 to 10 wt% of supported dust reducer agents, 1 to 60 wt% of polymers, optionally 10 to 85 wt% of fillers, the figures in wt% being based on the dry weight of the building material formulations and adding up in total to 100 wt%.

13. Method for producing building material formulations according to Claim 1 to 12, **characterized in that** the dust reducer agents are present at 0.001 to 5 wt% in the building material formulations, based on the dry weight of the building material formulations.

14. Building material formulations in the form of dry mixes obtainable by one of the methods of Claims 1 to 13.

15. Use of the method products from any of Claims 1 to 13 in tile adhesives, jointing mortars, adhesives for producing thermal insulation composite systems, reinforcing compounds, self-leveling compounds, repair mortars, or plasters, fine mineral plasters, grouts, skim coats, or concrete.

## Revendications

1. Procédé pour la préparation de formulations pour matériaux de construction sous forme de mélanges secs, **caractérisé en ce que**
(a) un ou plusieurs agents de réduction de poussière sont appliqués sur un ou plusieurs supports inorganiques,
des agents de réduction de poussière supportés étant ainsi formés, les supports inorganiques présentant une porosité ≥ 65%, et
les agents de réduction de poussière étant choisis dans le groupe constitué par les acides gras, les dérivés d'acide gras, les huiles naturelles, les hydrocarbures et les polysiloxanes constitués d'unités de formule générale R_{c}Si(OR')_{d}(OH)ₑO_{(4-c-d-e)/2} avec c = 0 à 3, d = 0 à 3, e = 0 à 3, dans laquelle la somme de c + d + e par unité vaut au plus 3,5, dans laquelle les radicaux R sont identiques ou différents et signifient des radicaux hydrocarbonés ramifiés ou non ramifiés, le cas échéant substitués, comprenant 1 à 22 atomes de carbone, les radicaux R' signifient des radicaux hydrocarbonés identiques ou différents, le cas échéant substitués, comprenant à chaque fois 1 à 6 atomes de carbone, et
(b) les agents de réduction de poussière supportés obtenus dans l'étape (a) sont mélangés avec un ou plusieurs liants minéraux, un ou plusieurs polymères à base d'un ou de plusieurs monomères éthyléniquement insaturés, le cas échéant une ou plusieurs charges et le cas échéant un ou plusieurs additifs.

2. Procédé pour la préparation de formulations pour matériaux de construction selon la revendication 1, **caractérisé en ce qu'**on prépare d'abord des prémélanges par mélange d'un ou de plusieurs agents de réduction de poussière supportés et d'un ou de plusieurs composants du groupe comprenant les polymères à base d'un ou de plusieurs monomères éthyléniquement insaturés, les charges et les additifs et on mélange les prémélanges ainsi obtenus avec un ou plusieurs liants minéraux, le cas échéant une ou plusieurs charges, le cas échéant un ou plusieurs polymères à base d'un ou de plusieurs monomères éthyléniquement insaturés et le cas échéant un ou plusieurs additifs.

3. Procédé pour la préparation de formulations pour matériaux de construction selon la revendication 1 ou 2, **caractérisé en ce qu'**un ou plusieurs agents de réduction de poussière sont choisis dans le groupe constitué par les polysiloxanes de formule générale R'"ₐR"₃₋ₐSiO(SiR"₂O)ₙSiR''₃₋ₐR'"_{a'} dans laquelle les différents radicaux R" peuvent présenter, indépendamment les uns des autres, les significations indiquées dans la revendication 1 pour R et (OR'), R'" représente OH, a signifie une valeur entière entre 0 et 3 et n vaut une valeur entière entre 0 et 500, les acides gras ou les dérivés d'acide gras choisis dans le groupe comprenant les acides gras saturés et insaturés comprenant 8 à 22 atomes de carbone, leurs savons métalliques, leurs amides ainsi que leurs esters avec des alcools monovalents comprenant 1 à 14 atomes de carbone, avec du glycol, avec du polyglycol, avec du polyalkylèneglycol, avec du glycérol, avec de la monoéthanolamine, de la diéthanolamine ou de la triéthanolamine, avec des monosaccharides et avec des composés polyhydroxy, les huiles naturelles contenant un ou plusieurs acides carboxyliques ou leurs esters, les acides carboxyliques contenant 4 à 28 atomes de carbone et les alcools contenant 1 à 12 atomes de carbone et les hydrocarbures présentant des points ou des plages d'ébullition entre 100 à 400°C (à une pression de 1 bar) et plus de 10 atomes de carbone.

4. Procédé pour la préparation de formulations pour matériaux de construction selon la revendication 1 à 3, **caractérisé en ce qu'**un ou plusieurs agents de réduction de poussière sont choisis dans le groupe constitué par les diméthylpolysiloxanes, les diméthylpolysiloxanes à terminaisons bloquées par des groupes triméthylsiloxy et les diméthylpolysiloxanes présentant des groupes Si-OH dans les unités en position terminale.

5. Procédé pour la préparation de formulations pour matériaux de construction selon la revendication 1 à 4, **caractérisé en ce que** les supports inorganiques sont à base de carbonates, de silicates ou d'autres oxydes ou minéraux inorganiques.

6. Procédé pour la préparation de formulations pour matériaux de construction selon la revendication 1 à 5, **caractérisé en ce que** les supports inorganiques sont choisis dans le groupe comprenant le carbonate de magnésium, le carbonate de calcium, le quartz, la cristobalite, la silice, les terres de diatomées, le kieselgur, les terres de silice, les hydrosilicates de magnésium, la microsilice, la perlite, la dicalite, les zéolithes, le Poraver (verre moussé), le dioxyde de titane, l'argile, les terres de blanchiment, le kaolin, le talc, le mica, l'oxyde d'aluminium activé, la vermiculite et les phosphates.

7. Procédé pour la préparation de formulations pour matériaux de construction selon la revendication 1 à 6, **caractérisé en ce que** la proportion des pores présentant un diamètre de pore ≥ 2000 nm dans les supports inorganiques est ≥ 10%, par rapport au nombre total des pores des supports inorganiques (détermination au moyen de porosimétrie au mercure).

8. Procédé pour la préparation de formulations pour matériaux de construction selon la revendication 1 à 7, **caractérisé en ce que** la proportion des pores présentant un diamètre de pore ≥ 20 000 nm dans les supports inorganiques est ≥ 5%, par rapport au nombre total des pores des supports inorganiques (détermination au moyen de porosimétrie au mercure).

9. Procédé pour la préparation de formulations pour matériaux de construction selon la revendication 1 à 8, **caractérisé en ce que** les supports inorganiques présentent une densité de 50 à 300 g/dm³ (détermination selon la norme DIN EN ISO 787-10).

10. Procédé pour la préparation de formulations pour matériaux de construction selon la revendication 1 à 9, **caractérisé en ce que** les agents de réduction de poussière supportés contiennent 5 à 90% en poids de support inorganique, par rapport au poids total de l'agent de réduction de poussière et de support inorganique.

11. Procédé pour la préparation de formulations pour matériaux de construction selon la revendication 1 à 10, **caractérisé en ce que** les agents de réduction de poussière supportés contiennent 10 à 95% en poids d'agent de réduction de poussière, par rapport au poids des supports inorganiques.

12. Procédé pour la préparation de formulations pour matériaux de construction selon la revendication 1 à 11, **caractérisé en ce que** les formulations pour matériaux de construction contiennent 2 à 70% en poids de liants minéraux, 0,001 à 10% en poids d'agent de réduction de poussière supporté, 1 à 60% en poids de polymères, le cas échéant 10 à 85% en poids de charges, les indications en % en poids se rapportant au poids sec des formulations pour matériaux de construction et leur somme valant au total 100% en poids.

13. Procédé pour la préparation de formulations pour matériaux de construction selon la revendication 1 à 12, **caractérisé en ce que** les agents de réduction de poussière sont contenus à raison de 0,001 à 5% en poids dans les formulations pour matériaux de construction, par rapport au poids sec des formulations pour matériaux de construction.

14. Formulations pour matériaux de construction sous forme de mélanges secs pouvant être obtenus selon un des procédés des revendications 1 à 13.

15. Utilisation des produits de procédé de l'une quelconque des revendications 1 à 13 dans les colles pour carrelage, les mortiers de jointoiement, les colles pour la réalisation de systèmes composites d'isolation thermique, les masses d'armature, les masses autonivelantes, les mortiers de réparation ou les crépis, les enduits minéraux, les badigeons d'étanchéité, les enduits de parement (skim coats) ou les bétons.
